# EUROPEAN PATENT SPECIFICATION

(11) **EP 0 949 374 B1**
(45) Date of publication and mention of the grant of the patent: **07.04.2004**
(21) Application number: 98123308.3
(22) Date of filing: 08.12.1998
(51) Int. Cl.: D06F 37/30, D06F 37/40

(54) **Washing machine**
Waschmaschine
Machine à laver

(30) Priority: 10.04.1998 JP 9910298; 22.04.1998 JP 11194298; 28.05.1998 JP 14713198
(43) Date of publication of application: 13.10.1999
(73) Proprietor: MATSUSHITA ELECTRIC INDUSTRIAL CO., LTD, Kadoma-shi, Osaka 571-0000 (JP)
(72) Inventor: Koshiga, Kenji, Settsu-shi, Osaka, 566-0046 (JP); Nakajima, Shinichi, Takatsuki-shi, Osaka, 569-0854 (JP); Morinaka, Junichi, Otsu-shi, Shiga, 520-0865 (JP); Matsuda, Shinichi, Yodogawa-ku Osaka-shi, Osaka, 532-0022 (JP); Ura, Toshihiko, Takatsuki-shi, Osaka, 569-1044 (JP); Akasaka, Kenichi, Amagasaki-shi, Hyogo, 661-0963 (JP); Kondo, Norimasa, Hirakata-shi, Osaka, 573-0135 (JP)
(74) Representative: Kügele, Bernhard

(56) References cited:
- GB-A- 2 285 063
- GB-A- 2 314 092
- US-A- 4 232 536
- US-A- 5 824 114
- PATENT ABSTRACTS OF JAPAN vol. 097, no. 005, 30 May 1997 (1997-05-30) & JP 09 010474 A (TOSHIBA CORP;TOSHIBA AVE CORP), 14 January 1997 (1997-01-14) -& US 5 778 703 A14 July 1998 (1998-07-14)

## Description

### FIELD OF THE INVENTION

The present invention relates to a washing machine for washing and rinsing by agitating blades which rotate at low speed, and dewatering by high speed rotation of a dewatering tank.

### BACKGROUND OF THE INVENTION

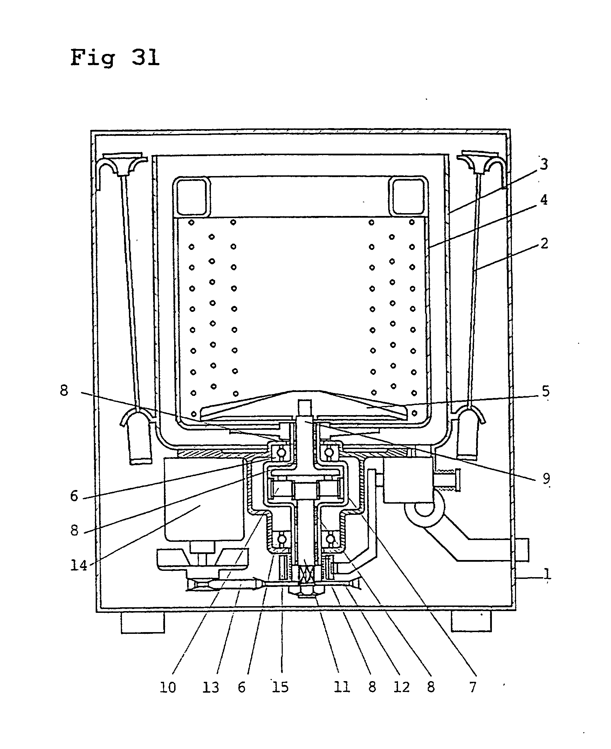

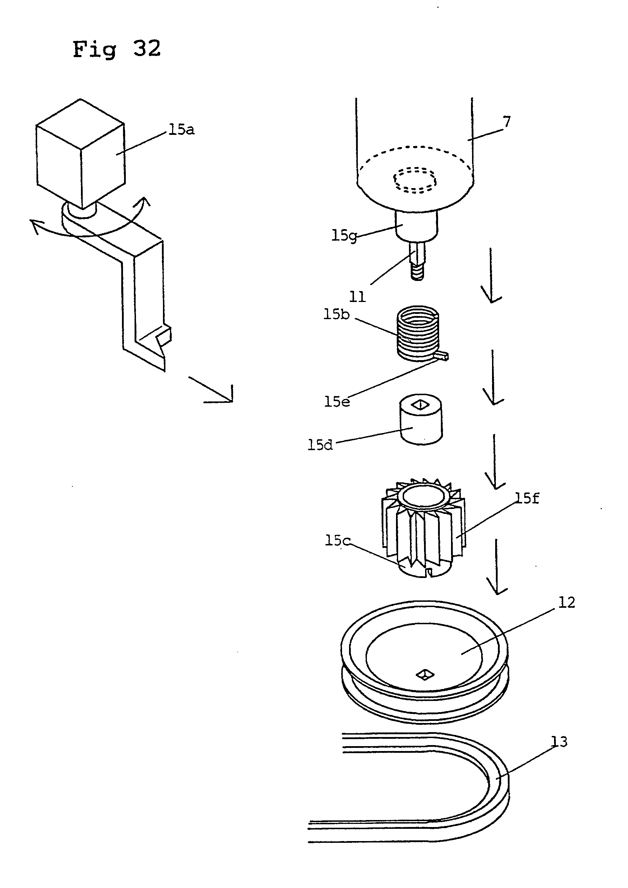

Conventionally, a washing machine was composed as shown in Fig. 31 and Fig. 32. Its constitution is described below.

As shown in Fig. 31, in an outer casing 1, an outer tank 3 is supported by a suspension 2, and a dewatering tank 4 serving also as a washing tank (hereinafter called dewatering tank 4) is provided in the outer tank 3. The dewatering tank 4 is opened in the ceiling, so that the laundry can be loaded from the ceiling. Agitating blades 5 are provided in the bottom, and multiple holes are opened in the side wall.

The dewatering tank 4 is fixed on a dewatering shaft 7 supported by a bearing 6 provided in the bottom of the outer tank 3. The agitating blades 5 are fixed on a washing shaft 9 supported by a bearing 8 inside of the dewatering shaft 7. This washing shaft 9 is connected to a reduction mechanism 10, and a pulley 12 is fitted to a washing side input shaft 11. In the mounting part of the pulley 12 of the washing side input shaft 11, four sides are cut off, and the mounting hole of the pulley 12 has a fitting shape, and the torque of the pulley 12 is transmitted. The pulley 12 is connected to a drive motor 14 through a belt 13. The washing side input shaft 11 has a clutch mechanism 15 for transmitting the rotation of the drive motor 14 by changing over to the washing shaft 9 or dewatering shaft 7.

The clutch mechanism 15 comprises, as shown in Fig. 32, a clutch input boss 15d having a hole in a shape to be fitted into the cut portion of the four sides provided in the washing side input shaft 11, a clutch spring 15b, a control pawl 15e formed by bending the end of the clutch spring 15b, a release sleeve 15c having a notch for fitting the control pawl 15e formed by bending the end of the clutch spring 15b, clutch drive means 15a to be engaged with a stopper 15f of the release sleeve 15c, and a clutch output boss 15g of the dewatering shaft 7 on which the clutch spring 15b is wound.

In this constitution, in the washing and rinsing stroke, when the clutch drive means 15a of the clutch mechanism 15 is engaged with the stopper 15f of the release sleeve 15c, and the control pawl 15e formed by bending the end of the clutch spring 15b is fixed, the clutch spring 15b cannot be wound around the clutch input boss 15d, and if the clutch input boss 15d rotates, rotation cannot be transmitted to the clutch output boss 15g of the dewatering shaft 7. Rotation of the drive motor 14 is transmitted only to the agitating blades 5 through the washing shaft 9, and mechanical force is given to the laundry. Thus, washing and rising of the laundry contained in the dewatering tank 4 are progressed.

In the dewatering stroke, when the clutch drive means 15a of the clutch mechanism 15 is disengaged from the stopper 15f of the release sleeve 15c, and the control pawl 15e formed by bending the end of the clutch spring 15b is set free, the clutch spring 15b is wound around the clutch input boss 15d. Accordingly, when the clutch input boss 15d rotates, rotation is transmitted to the clutch output boss 15g of the dewatering shaft 7. Rotation of the drive motor 14 is transmitted only to the dewatering tank 4 through the dewatering shaft 7, and the entire dewatering tank 4 is put into rotation. As the dewatering tank 4 rotates, the water in the laundry after washing and rinsing is wrung out by centrifugal force into the outer tank 3 through multiple holes opened in the side wall of the dewatering tank 4. Thus, the laundry is dewatered automatically.

In such conventional washing machine, the drive motor 14 is transmitting power to the reduction mechanism 10 through the belt 13. Accordingly, if attempted to apply a larger mechanical force to the laundry in order to increase the washing capacity or enhancing the cleaning power, transmission torque is defined by the upper limit by belt slip, belt elongation, belt breakage, or tension changes of the belt 13 due to time-course changes, and transmission torque corresponding to large capacity cannot be obtained.

Moreover, since heavy objects, that is, the drive motor 14 and the reduction mechanism 10 are disposed side by side beneath the outer tank 3, the position of center of gravity of the dewatering tank 4 and outer tank 3 suspended in the outer casing 1 is deviated from the center of rotation (dewatering shaft 7) of the dewatering tank 4. Therefore, in dewatering rotation of the dewatering tank 4, the balance is likely to be broken, and vibration due to rotation becomes larger.

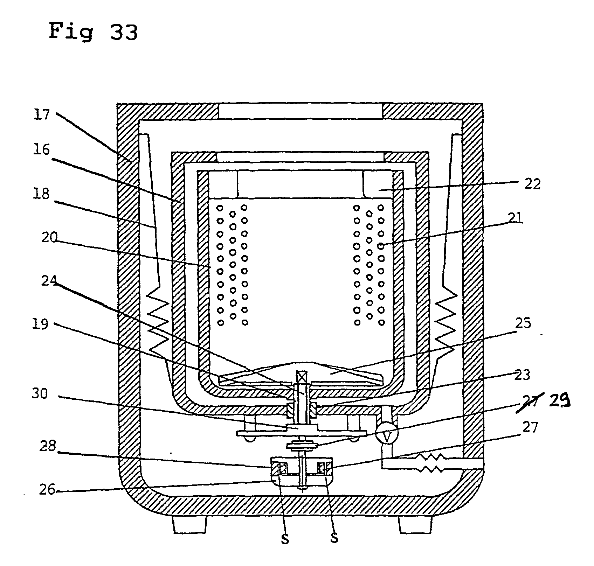

To solve such problems, a washing machine constituted as shown in Fig. 33 has been proposed.

As shown in Fig. 33, an outer tank 16 is suspended by a plurality of suspensions 18 in an outer casing 17, and inside of the outer tank 16, moreover, there is a dewatering tank 20 serving also as washing tank (hereinafter called dewatering tank 20) which is fixed to the upper end side of a dewatering shaft 19 and is rotated by the dewatering shaft 19. At the side of the dewatering tank 20, a plurality of water passing holes 21 are formed, and a liquid balancer 22 is disposed at the upper opening, so that the laundry may be loaded through the upper opening.

A bearing 23 is to support the dewatering shaft 19, and is provided in the bottom of the outer tank 16. A washing shaft 24 is disposed inside of the hollow dewatering shaft 19, and is disposed to be coaxial with the dewatering shaft 19. At the upper end of the washing shaft 24, agitating blades 25 are provided rotatably in the inner bottom of the dewatering tank 20, and a rotor 27 of a drive motor 26 is connected to the lower end. The drive motor 26 comprises the rotor 27, and a stator 28 disposed oppositely to a magnet provided on the outer circumference of this rotor 27, and the rotor 27 is rotated by rotary magnetic field of the stator 28. Between the lower end of the dewatering shaft 19 and the rotor 27, a clutch mechanism 30 is provided through a coupling 29, and by changing over the clutch mechanism 30, rotation of the rotor 27 is transmitted or not transmitted to the dewatering shaft 19.

In this constitution, in the washing and rinsing stroke, the clutch mechanism 30 is changed over, and the dewatering shaft 19 and rotor 27 are cut off, so that the rotation of the rotor 27 of the drive motor 26 is transmitted only to the agitating blades 25 through the washing shaft 24, and a mechanical force is given to the laundry. Thus, washing and rinsing of the laundry contained in the dewatering tank 20 are progressed.

In the dewatering stroke, the water in the dewatering tank 20 is discharged, the clutch mechanism 30 is changed over, and the dewatering shaft 19 and rotor 27 are coupled, thereby rotating the washing shaft 24, dewatering shaft 19 and dewatering tank 20 coupled to the rotor 27 of the drive motor 26. As the dewatering tank 20 rotates, the water in the laundry after washing and rinsing is wrung out into the water tank 16 from multiple water passing holes 21 provided in the side of the dewatering tank 20 by centrifugal force. Thus, the laundry is dewatered.

In the washing machine of such constitution , however, in order to suppress effectively imbalance in the dewatering stroke, the center of rotation of the dewatering shaft 19 and the washing shaft 24 were disposed coaxially with the rotary shaft of the drive motor 26 by using a coupling 30, and the position of center of gravity of the dewatering tank 20 and outer tank 16 was matched nearly with the position of center of gravity of the drive motor 26. It therefore required alignment of the coupling 30, the assembling performance was poor, and the washing machine was higher by the portion of the height of the coupling 30, which added to the cost.

Reference may also be made to US 4232536, relative to which the invention is characterised.

### SUMMARY OF THE INVENTION

The present invention is defined in the claims.

An advantage of the invention is that it can solve the problems of the prior art, and it enables a washing machine to be provided that is capable of increasing the rotating torque of the agitating blades without increasing the torque of the drive motor, and coping with increase of the washing capacity, while avoiding increase of size of drive motor, by suppressing eccentricity to the washing side input shaft if the laundry collides against the agitating blades.

In a preferred embodiment, a washing shaft for rotating the agitating blades disposed in a dewatering tank is disposed coaxially on a hollow dewatering shaft for rotating the dewatering tank, the washing shaft is connected to the output side of a reduction mechanism, a washing side input is connected to the side of the reduction mechanism to rotate the washing shaft by decelerating the rotation of the drive motor, and a rotor of the drive motor is coupled to the lower part of the washing side input shaft, and in this constitution, therefore, since the agitating blades are rotated by reducing the rotating speed of the drive motor by the reduction mechanism, the rotating torque of the agitating blades can be increased without increasing the torque of the drive motor. If the laundry collides against the agitating blades, the eccentricity of the washing shaft is absorbed by the reduction mechanism, and eccentricity of the reduction mechanism to the washing side input shaft can be suppressed, and the eccentricity of the rotor coupled to this input shaft is suppressed, the gap between the rotor and stator is decreased, size increase of the drive motor is avoided, and a washing machine capable of coping with increase of washing capacity is presented. Moreover, since the rotor is coupled directly to the washing side input shaft, the bearing of the washing side input shaft can be used commonly without particularly installing a bearing for the drive motor.

Also in a preferred embodiment, the reduction mechanism and drive motor are disposed coaxially, and the clutch mechanism for transmitting or not transmitting the rotation of the drive motor to the dewatering shaft is composed of a torque transmitting unit for transmitting rotation of the drive motor to the dewatering shaft and a drive unit for contacting with or departing from the torque transmitting unit, and part of the torque transmitting unit is formed in the rotor of the drive motor, and therefore the position of the center of gravity of dewatering tank and outer tank and the center of rotation of the dewatering tank can be matched, generation of imbalance in dewatering can be suppressed, the belt is not necessary and therefore problems by belt are eliminated, and moreover since part of the torque transmitting unit of the clutch mechanism is formed in the rotor of the drive motor, the number of parts is decreased and the assembling performance is enhanced, the clutch mechanism is reduced in thickness and size, and therefore increase of capacity in the lower part of the main body of the washing machine can be suppressed.

More preferably, the drive motor is composed of rotor, stator, and stator housing, and the stator housing is held in the case incorporating the dewatering shaft, and in this constitution, the assembling performance is enhanced by eliminating matching of axial centers of the drive motor, dewatering shaft and washing shaft, or gap adjustment of rotor and stator, and moreover the gap between the rotor and stator is reduced, increase of size of drive motor is avoided, and hence it is possible to cope with increase of washing capacity without adding to the cost.

Further preferably, in the constitution in which the reduction mechanism and drive motor are disposed coaxially, the clutch mechanism is disposed inside of the stator housing for composing the drive motor, and the clutch driving means for driving the clutch mechanism is driven from outside of the stator housing, the number of parts is curtailed, generation of imbalance in dewatering is suppressed, and if water overflows from the outer tank due to some cause, water is prevented from entering inside of the drive motor, and further if the clutch lever area is touched by hand by mistake, fingers are not caught into the drive motor, so that the safety is enhanced.

### BRIEF DESCRIPTION OF THE DRAWINGS

Fig. 1 is a sectional view of a washing machine in a first embodiment of the invention;
Fig. 2 is a perspective exploded view showing the constitution of a drive unit of the same washing machine;
Fig. 3 (a) is an essential sectional view of the drive unit in washing and rinsing stroke of the same washing machine;
Fig. 3 (b) is an essential sectional view of the drive unit in dewatering stroke of the same washing machine;
Fig. 4 is a sectional view of a washing machine in a second embodiment of the invention;
Fig. 5 is a sectional view of a washing machine in a third embodiment of the invention;
Fig. 6 is a sectional view of a washing machine in a fourth embodiment of the invention;
Fig. 7 is a sectional view of a washing machine in a fifth embodiment of the invention;
Fig. 8 is a sectional view of a washing machine in a sixth embodiment of the invention;
Fig. 9 is an essential perspective exploded view of a washing machine in a seventh embodiment of the invention;
Fig. 10 is a sectional view of a washing machine in an eighth embodiment of the invention;
Fig. 11 is a sectional view of a washing machine in a ninth embodiment of the invention;
Fig. 12 is a sectional view of a washing machine in a tenth embodiment of the invention;
Fig. 13 is a sectional view of a washing machine in an eleventh embodiment of the invention;
Fig. 14 is a sectional view of a washing machine in a twelfth embodiment of the invention;
Fig. 15 is a perspective exploded view showing a constitution of a drive unit of the same washing machine;
Fig. 16 is a perspective exploded view showing a constitution of a drive unit of a washing machine in a thirteenth embodiment of the invention;
Fig. 17 is a perspective exploded view showing a constitution of a drive unit of a washing machine in a fourteenth embodiment of the invention;
Fig. 18 is a perspective exploded view showing a constitution of a drive unit of a washing machine in a fifteenth embodiment of the invention;
Fig. 19 is a perspective exploded view showing a constitution of a drive unit of a washing machine in a sixteenth embodiment of the invention;
Fig. 20 is a perspective exploded view showing a constitution of a drive unit of a washing machine in a seventeenth embodiment of the invention;
Fig. 21 is a perspective exploded view showing a constitution of a drive unit of a washing machine in an eighteenth embodiment of the invention;
Fig. 22 is a sectional view showing a constitution of a drive unit of a washing machine in a nineteenth embodiment of the invention;
Fig. 23 is an essential sectional view showing a constitution of a drive unit of a washing machine in a twentieth embodiment of the invention;
Fig. 24 is an essential sectional view showing a constitution of a drive unit of a washing machine in a twenty-first embodiment of the invention;
Fig. 25 is an essential sectional view showing a constitution of a drive unit of a washing machine in a twenty-second embodiment of the invention;
Fig. 26 is an essential sectional view showing a constitution of a drive unit of a washing machine in a twenty-third embodiment of the invention;
Fig. 27 is an essential sectional view showing a constitution of a drive unit of a washing machine in a twenty-fourth embodiment of the invention;
Fig. 28 is an essential sectional view showing a constitution of a drive unit of a washing machine in a twenty-fifth embodiment of the invention;
Fig. 29 is an essential sectional view showing a constitution of a drive unit of a washing machine in a twenty-sixth embodiment of the invention;
Fig. 30 is an essential sectional view showing a constitution of a drive unit of a washing machine in a twenty-seventh embodiment of the invention;
Fig. 31 is a sectional view of a conventional washing machine;
Fig. 32 is a perspective exploded view showing a constitution of a drive unit of the same washing machine; and
Fig. 33 is a sectional view of other conventional washing machine.

### VI. DESCRIPTION OF THE PREFERRED EMBODIMENTS

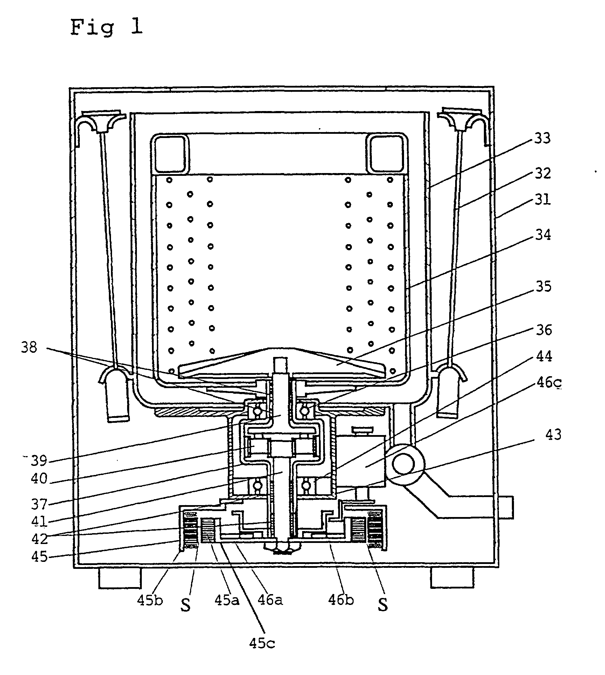

A first embodiment of the invention is described below while referring to Fig. 1 to Fig. 3.

As shown in Fig. 1, in an outer casing 31, an outer tank 33 is suspended by a suspension 32, and vibration of dewatering is absorbed by the suspension 32. In the outer tank 33, a dewatering tank 34 serving also as washing tank (hereinafter called dewatering tank 34) is rotatably disposed. In the inner bottom of the dewatering tank 34, agitating blades 35 for agitating the laundry are rotatably disposed. A hollow dewatering shaft 37 is supported by a dewatering bearing 36 provided in the center of the bottom of the outer tank 33. The upper end side of this dewatering shaft 37 is fixed in the bottom of the dewatering tank 34, and the dewatering tank 34 is rotated. A washing shaft 39 rotates the agitating blades 35 by fixing its upper end side to the agitating blades 35, and this washing shaft 39 is disposed coaxially in the hollow part of the dewatering shaft 37, and is supported by a washing bearing 38 provided in the hollow part of the dewatering shaft 37.

A reduction mechanism 40 is incorporated in the dewatering shaft 37, and is designed to reduce the rotating speed by a gear group, and in order to prevent abnormal rotation due to imbalance of the dewatering tank 34 in dewatering operation, preferably, the reduction mechanism is composed of a planet gear having plural gears arranged in a symmetrical profile. At the output side of this reduction mechanism 40, the washing shaft 39 is connected, and a washing side input shaft 41 is connected to the input side. The washing side input shaft 41 is supported by an input bearing 42 disposed in the lower side hollow part of the dewatering shaft 37. The dewatering shaft 37 incorporating the reduction mechanism 40 is incorporated in the case 43, and the lower part of the dewatering shaft 37 is supported by a bearing 44 provided in the lower part of the case 43. This case 43 is fixed to the bottom side of the outer tank 33.

A drive motor 45 is for rotating the dewatering shaft 37 and washing side input shaft 41, and comprises a disk-shaped rotor 45a having a magnet mounting part 45c extending in the height direction on its outer circumference, and a stator 45b disposed at the outer circumferential side of the magnet of the rotor 45a so as to be opposite to the magnet adhered to the outer circumference of the magnet mounting part 45c, for applying a rotary magnetic field to the rotor 45a. A gap S is provided between the stator 45b and rotor 45a. This gap S is set in consideration of fluctuation of parts so that the outer circumference of the rotor 45a rotated by the rotary magnetic field of the stator 45b, that is, the magnet may not contact with the stator 45b, and is defined also in consideration of the eccentric amount of the rotor 45a by the force received during rotation of the output shaft rotated by the drive motor 45, that is, the washing shaft 39 and dewatering shaft 37. The rotor 45a of the drive motor 45 is coupled to the lower part of the washing side input shaft 41, and the reduction mechanism 40 and drive motor 45 are disposed coaxially.

A clutch mechanism 46 is for transmitting or not transmitting the rotation of the drive motor 45 to the dewatering shaft 37, and it is partly coupled to the rotor 45a of the drive motor 45. That is, the clutch mechanism 46 comprises a torque transmitting unit for transmitting the torque of the rotor 45a of the drive motor 45, and a drive unit for contacting with or departing from the torque transmitting unit. This torque transmitting unit is composed of a fixed clutch 46a formed in part of the rotor 45a coupled to the lower part of the washing side input shaft 41 of the reduction mechanism 40, and a movable clutch 46b contacting with or departing from the fixed clutch 46a, and rotating together with the dewatering shaft 37 by a drive unit 46c composed of solenoid and others.

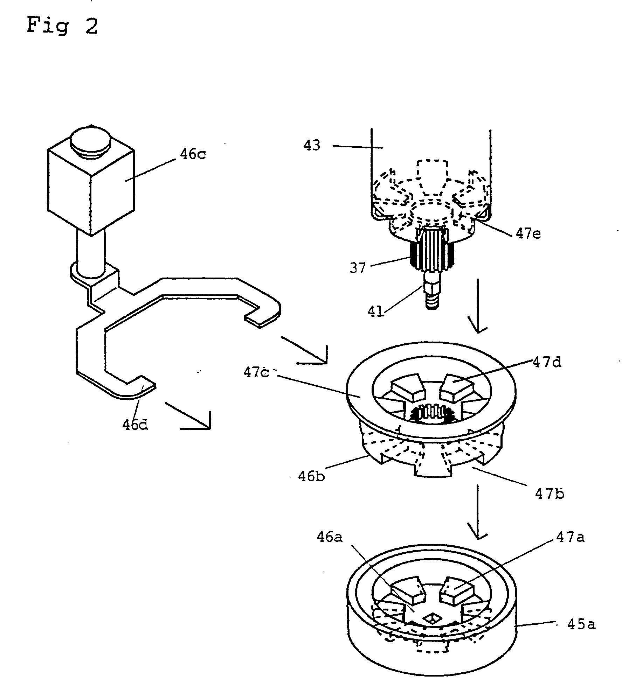

As shown in Fig. 2, the fixed clutch 46a is formed as a part excluding the magnet of the rotor 45a, and its shape is a cylindrical shape with a bottom, and a square through-hole is provided in the bottom for coupling with the lower end side of the washing side input shaft 41. On the upper side of the bottom, a bump 47a radially extended from the through-hole is formed. The movable clutch 46b has a cylindrical shape with a bottom so as to be inserted inward from the upper opening of the fixed clutch 46a, and a recess 47b is formed in its lower bottom so as to be engaged with the bump 47a of the fixed clutch 46a. A flange 47c is provided at the side of the movable clutch 46b, and the lower side of the flange 47c is designed to contact with a lever 46d moving up and down by the solenoid 46c. Therefore, when the lever 46d is moved up and down by the solenoid 46c, the movable clutch 46b moves up and down in accordance with the motion of the level 46d, so as to contact with or depart from the fixed clutch 46a.

In the movable clutch 46b, a through-hole is formed in the center, and it is inserted into the lower side of the dewatering shaft 37. In the lower part of the dewatering shaft 37, a plurality of vertical grooves extending in the vertical direction are provided, and a plurality of bumps to be engaged with the vertical grooves of the dewatering shaft 37 are provided at the inner circumferential side of the through-hole of the movable clutch 46b, and the movable clutch 46b is movable in the vertical direction along the vertical grooves of the dewatering shaft 37, while the bumps of the movable clutch 46b are engaged with the vertical grooves of the dewatering shaft 37, and therefore while contacting with the fixed clutch 46a, rotation of the movable clutch 46b can be transmitted to the dewatering shaft 37.

The movable clutch 46b, as shown in Fig. 1, is provided in the dewatering shaft 37 extending downward (to the clutch mechanism side) together with the outer casing of the reduction gear 40, and at the downward side of the dewatering shaft 37, as shown in Fig. 2, a plurality of grooves extending in the vertical direction are provided, while the movable clutch 46b has a through-hole for passing the dewatering shaft 37, and a plurality of bumps to be engaged with the grooves of the dewatering shaft 37 are formed in this through-hole. Therefore, the movable clutch 46b can move up and down in a range of forming the grooves in the dewatering shaft 37, and the torque of the movable clutch 46b is transmitted to the dewatering shaft side.

In the inner bottom of the movable clutch 46b, a plurality of bumps 47d extending radially from the through-hole of the dewatering shaft 37 are formed. On the other hand, in the bottom of the case 43 for accommodating the reduction mechanism 40, a notch 47e for fixing the bump 47d of the movable clutch 46b is formed, and when the movable clutch 46b moves upward, the bump 47d is engaged with the notch 47e, and the rotation of the movable clutch 46b is arrested.

This embodiment relates to an inner rotor type in which the rotor 45a of the drive motor 45 is formed inside of the stator 45b, but it may be also formed in an outer rotor type in which the rotor 45a is formed outside of the stator 45b, or in other type in which the stator 45b and rotor 45a are opposite to each other in the vertical direction.

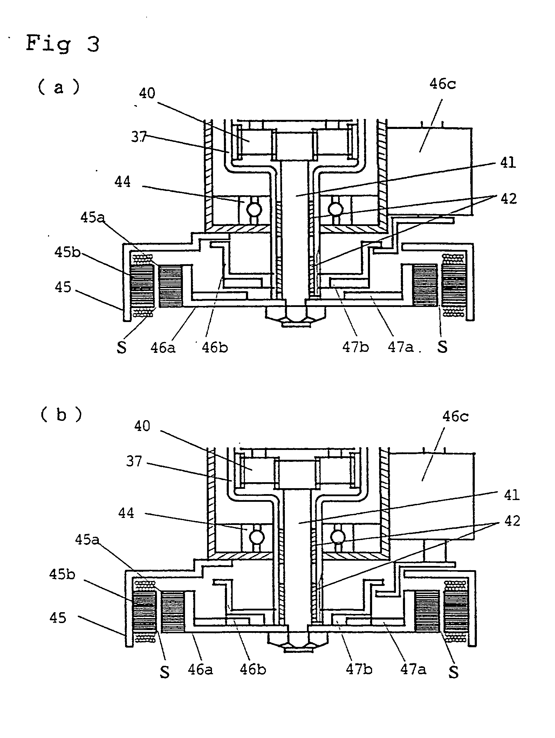

In such constitution, the operation is described below. First, in washing and rinsing stroke, power is supplied to the solenoid 46c, and by the generated magnetic force, as shown in Fig. 3 (a), the movable clutch 46b is moved to the side of the case 43 incorporating the reduction mechanism 40, that is, upward, and the engagement of the bump 47a of the fixed clutch 46a and the recess 47b of the movable clutch 46b is cleared. As the engagement is cleared, rotation of the rotor 45a of the drive motor 45 is not transmitted to the dewatering shaft 37, but is transmitted only to the agitating blades 35 through the washing side input shaft 41, reduction mechanism 40, and washing shaft 39, and mechanical force is applied to the laundry, and agitating operation is carried out. Thus, washing and rinsing of the laundry contained in the dewatering tank 34 are progressed.

After the washing and rinsing stroke, the dewatering stroke begins. In the dewatering stroke, the water in the dewatering tank 34 is discharged, and power supply to the solenoid 46c is stopped at the same time. At this time, the movable clutch 46b descends along the vertical grooves of the dewatering shaft 37 by the own weight as shown in Fig. 3 (b), and the bump 47a of the fixed clutch 46a and the recess 47b of the movable clutch 46b are engaged with each other. Therefore, by the engagement of the bump 47a of the fixed clutch 46a and the recess 47b of the movable clutch 46b, the dewatering shaft 37 and rotor 45a are coupled with each other, and rotation of the rotor 45a of the drive motor 45 is transmitted to the dewatering shaft 37, and the agitating blades 35 and the entire dewatering tank 34 rotate together. By the centrifugal force generated by rotation of the dewatering tank 34, the water in the laundry after rinsing is wrung out into the outer tank 33 from multiple holes formed in the side of the dewatering tank 34. Thus, the laundry is dewatered automatically.

In this way, the laundry charged in the dewatering tank 34 finishes the full strokes of washing, rinsing and dewatering.

In the washing and rinsing stroke, for example, when the rotation of the rotor 45a of the drive motor 45 and the washing side input shaft 41 is reduced to 1/6 by the reduction mechanism 40 and is transmitted to the washing shaft 39 and agitating blades 35, ignoring the transmission efficiency, the torque is about six times larger than before reduction. Thus, in the structure of coupling the washing shaft 39 and washing side input shaft 41 through the reduction mechanism 40, if the torque of the drive motor 45 is small, the torque for rotating the agitating blades 35 can be increased, and increase of washing capacity and enhancement of cleaning performance can be realized without increasing the torque of the drive motor 45.

Incidentally, the laundry collides against the agitating blades 35 and the washing shaft 39 receives an eccentric force, but since the washing shaft 39 and washing side input shaft 41 are coupled through the reduction gear 40, this force is absorbed in the gap between gears of the reduction mechanism 40, and action of eccentric force on the washing side input shaft 41 is suppressed, so that eccentricity of the rotor 45a of the drive motor 45 coupled to the lower part of the washing side input shaft 41 can be prevented. Therefore, the gap S between the rotor 45a and stator 45b is not required to be larger than necessary, and increase of external size of the drive motor 45 can be prevented. Still more, when the gap S between the rotor 45a and stator 45b is smaller, the torque for rotating the rotor 45a can be effectively enhanced.

Moreover, when assembling the drive motor 45, first the rotor 45a is fixed in the lower part of the washing side input shaft 41, then the annular stator 45b is inserted so as to be positioned at the outer circumferential side of this rotor 45a, and this stator 45b is fixed in the lower part of the case 43. Therefore, depending on the mounting position of the stator 45b or fluctuations of parts, the gap S between the rotor 45a and stator 45b may not be uniform on the whole circumference, and large gaps and small gaps occur. If the gap S is not uniform by assembling, the eccentric amount of the rotor 45a can be suppressed, and contact between the rotor 45a and stator 45b during rotation can be prevented.

Although the laundry collides against the agitating blades 35 and the washing shaft 39 receives an eccentric force, since the washing shaft 39 is supported by the washing bearing 38, this force is first received by the washing bearing 38, and then lessened by the reduction mechanism 40, so that eccentricity of the rotor 45a of the drive motor 45 is further suppressed.

Similarly, clothes collide against the dewatering tank 34, and the dewatering shaft 37 receives an eccentric force, since rotation of the drive motor 45 is not transmitted to the dewatering shaft 37 in the washing and rinsing stroke by means of the clutch mechanism, eccentricity of the dewatering shaft 37 is not transmitted to the drive motor 45, so that eccentricity of the rotor 45a of the drive motor 45 is still more suppressed.

In addition, since the lower part of the washing side input shaft 41 and the clutch mechanism are directly coupled to the rotor 45a of the drive motor 45, the bearing for supporting the rotary shaft of the rotor 45a is not necessary, and also alignment of the input bearing 42 of the washing side input shaft 41 coupled to the rotor 45a in its lower part and the bearing 39 of the dewatering shaft 37 is not necessary.

Besides, the washing side input shaft 41 of the reduction mechanism 40 and the rotor 45a of the drive motor 45 are directly coupled. That is, since the reduction mechanism 40 and drive motor 45 are positioned coaxially, the position of center of gravity of the dewatering tank 34, outer tank 33, the reduction mechanism 40 provided beneath the outer tank 33 and drive motor 45, and the center of rotation of the dewatering tank 34 can be matched approximately, and generation of imbalance during dewatering can be suppressed. In the structure of this embodiment, since the outer tank 33 is supported by the suspension 32, unless the heavy objects such as the reduction mechanism 40 and drive motor 45 are positioned coaxially, the center of gravity is deviated, and the dewatering tank 34 cannot be rotated smoothly, but the dewatering tank 34 can be rotated smoothly in the embodiment. Further, since the reduction mechanism 40 and dewatering shaft 37 are rotated directly by the drive motor 45, the conventional belt is not needed, and problems of belt slip and durability do not exist.

In the dewatering stroke, it is possible that the dewatering shaft 37 may receive an eccentric force, but since the dewatering shaft 37 is supported by the dewatering bearing 36 and bearing 44, and this force is received by the dewatering bearing 36 and bearing 44, eccentricity of the rotor 45a of the drive motor 45 can be further suppressed.

Since the torque transmitting unit composed of the fixed clutch 46a and movable clutch 46b is located between the rotor 45a of the drive motor 45 and the lower part of the dewatering shaft 37, the structure of transmitting and not transmitting the rotation of the rotor 45a of the drive motor 45 to the dewatering shaft 37 can be realized easily.

Moreover, part of the torque transmitting unit of the clutch mechanism 46, that is, the fixed clutch 46a is formed on the rotor 45a of the drive motor 45, the number of parts is curtailed, and the assembling performance is enhanced, and also the clutch mechanism 46 is reduced in thickness and size, and large volume is not needed beneath the outer casing 31. In particular, in this embodiment, the rotor 45a has a tubular form with a bottom, and the bump 47a for transmitting the torque of the clutch mechanism 46 is provided in its inner space, and therefore the torque transmitting unit of the clutch mechanism 46 can be reduced in thickness, and increase of volume beneath the outer casing 31 can be further suppressed.

The torque transmitting unit of the clutch 46 is composed of the fixed clutch 46a formed in the rotor 45a, and the movable clutch 46b contacting with or departing from the fixed clutch 46a by the drive unit of the clutch mechanism 46, and the movable clutch 46b is driven by the drive unit of the clutch mechanism 46 to contact with the fixed clutch 46a when dewatering, and depart therefrom when washing, and therefore, when dewatering, by the drive unit of the clutch mechanism 46, the movable clutch 46b contacts with the fixed clutch 46a, and the washing shaft 39 and dewatering shaft 37 rotate together, so that dewatering is conducted. When washing, the movable clutch 46b departs from the fixed clutch 46a, and the dewatering shaft 37 does not rotate, while the washing shaft 39 is decelerated by the reduction mechanism 40, and the torque is enhanced and the agitating blades 35 are rotated to wash and rinse. Thus, in washing and rinsing, and in dewatering, the movable clutch 46b is moved to change over transmission to the dewatering shaft 37, while it is not necessary to move the fixed clutch 46a provided in the rotor 45a, so that complicated structure for moving the rotor 45a freely is not required.

Transmission of torque between the fixed clutch 46a and movable clutch 46b for composing the torque transmitting unit of the clutch mechanism 46 is realized by the bump 47a and recess 47b formed on the outer circumferential side from the center of the through-hole, and therefore if the torque for rotating the dewatering shaft 37 provided in the through-hole is increased, the recess 47b and bump 47a are not damaged. That is, when rotating the dewatering shaft 37 positioned in the through-hole from the position remote from the through-hole (the position of the recess 47b and bump 47a), the torque applied to the recess 47b and bump 47a can be suppressed by the force of moment, so that their damage can be prevented. Or, when rotating the dewatering shaft 37 by a large torque, as mentioned above, it is-possible to suppress the torque applied to the bump 47a of the fixed clutch 46a and the recess 47b of the movable clutch 46b formed to be engaged therewith, and therefore, for increasing the strength of the fixed clutch 46a and movable clutch 46b, increase of size can be prevented, and it also contributes to reduction of thickness of the clutch mechanism 46.

In this embodiment, as shown in Fig. 3 (a), when washing, the movable clutch 46b is moved by the solenoid 46c in the thrust direction of the dewatering shaft 37, that is, upward to clear engagement with the bump 47a of the fixed clutch 46a, while a bump 47d of the movable clutch 46b is engaged with a notch 47e in the lower part of the case 43, so that rotation of the movable clutch 46b is blocked. Since the case 43 is fixed beneath the outer tank 33, this case 43 itself does not rotate.

Therefore, by rotating the washing shaft 39 by inverting the direction when washing, the agitating blades 35 are rotated in both directions to agitate the laundry, and when agitating the laundry, the dewatering tank 34 receives this agitating force to rotate together. However, since the movable clutch 46b is stopped by the notch 47e of the case 43, rotation of the dewatering shaft 37 fitted into the through-hole of the movable clutch 47b is also blocked, and the rotation of the dewatering tank 34 coupled to the dewatering shaft 37 is blocked, too.

In this way, by preventing simultaneous rotation of the dewatering tank 34 in washing and rinsing, decline of cleaning performance is prevented. Moreover, when the movable clutch 46b is designed to have also a function for preventing simultaneous rotation of the dewatering tank 34, the simultaneous rotation preventive mechanism of the dewatering tank 34 can be eliminated, and the assembling performance is enhanced, and moreover since the simultaneous rotation preventive mechanism of the dewatering tank 34 is provided by making use of the upper side of the movable clutch 46b, there is no hindrance to reduction of thickness of the torque transmitting unit of the clutch mechanism 46.

In this embodiment, the rotor 45a and the fixed clutch 46a of the torque transmitting unit are formed integrally, but they may be also formed as independent members.

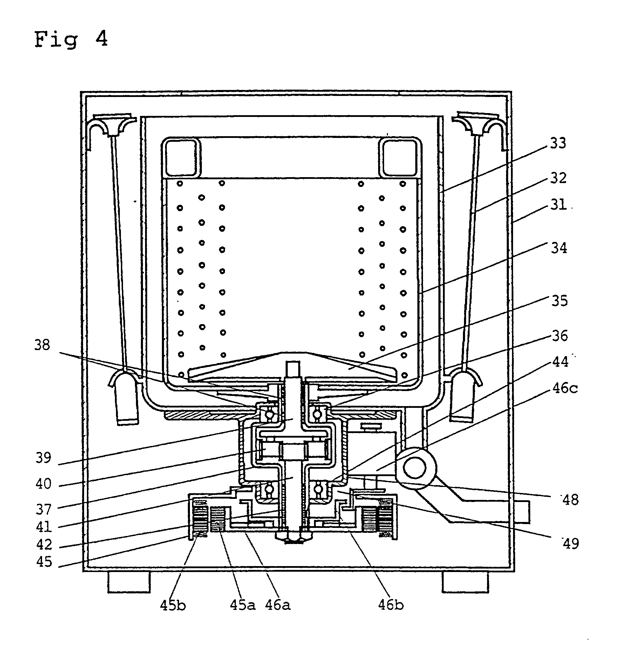

A second embodiment of the invention is described below while referring to Fig. 4. In Fig. 4, same components as in the first embodiment are identified with same reference numerals, and detailed description is omitted.

As shown in Fig. 4, a case 48 is formed in a tubular shape, and incorporates a dewatering shaft 37, and a bearing 44 for supporting the lower part of the dewatering shaft 37 is provided in a lower inner side. The lower outer circumference of the case 48 is curved to the axial central side, and a dent 49 is formed, and the mounting part of a drive motor 45 is formed in this dent 49.

In this constitution, the drive motor 45 can be installed closely to the case 48. Therefore, the length of the washing side input shaft 41 for connecting the rotor 45a of the drive motor 45 and the reduction mechanism 40 can be shortened, and the eccentric amount of the rotor 45a can be decreased, the gap between the rotor 45a and stator 45b may be set smaller, so that the drive motor 45 is further reduced in size and enhanced in performance.

Since the movable clutch 46b is a tubular form with a bottom, when the movable clutch 46b moves upward, it covers the lower part of the case 48 having the dent 49, and this dent 49 also serves as a clearance for the movable clutch 46b, and therefore in spite of the clutch mechanism, the length of the washing side input shaft 41 can be shortened, and the eccentric amount of the rotor 45a can be decreased.

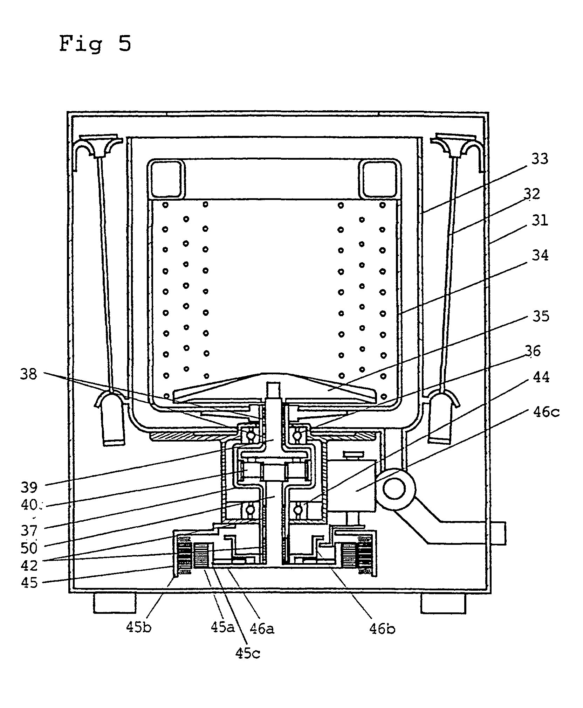

A third embodiment of the invention is described below while referring to Fig. 5. In Fig. 5, same components as in the first embodiment are identified with same reference numerals, and detailed description is omitted.

As shown in Fig. 5, a washing side input shaft 50 is formed integrally with the rotor 45a of the drive motor 45. Except for this integral structure, it has the same function as the washing side input shaft 41 explained in the first embodiment.

In this constitution, since the rotor 45a of the drive motor 45 and the washing side input shaft 50 are formed integrally, the coupling strength of the rotor 45a and the washing side input shaft 50 is obtained if the rotor 45a is thin, and hence the rotor 45a is reduced in weight, and the rotation starting characteristic is enhanced.

By the portion of reduction of thickness of the rotor 45a, the length of the washing side input shaft can be shortened and the rotor 45a may be formed closely to the washing side input shaft 50, and therefore the eccentric amount of the rotor 45a can be decreased.

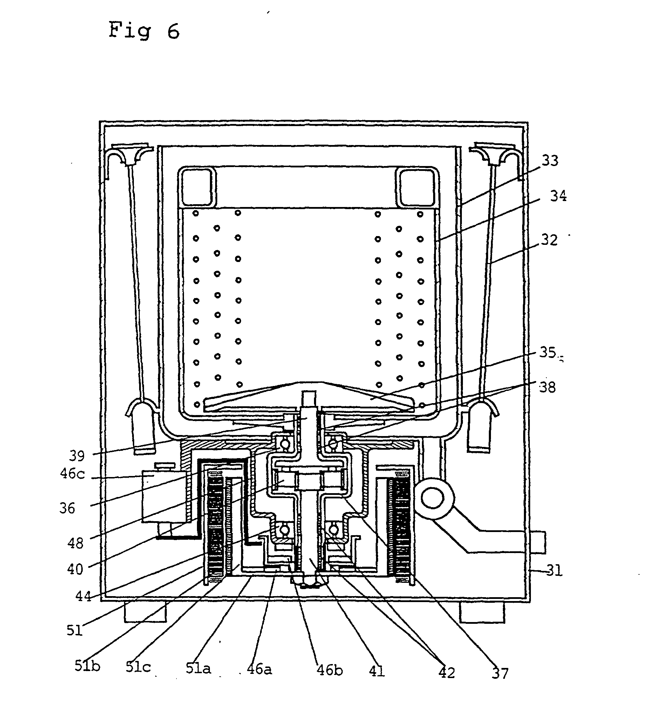

A fourth embodiment of the invention is described below while referring to Fig. 6. In Fig. 6, same components as in the first embodiment are identified with same reference numerals, and detailed description is omitted.

As shown in Fig. 6, a drive motor 51 is composed of a rotor 51 a having a magnet mounting part 51 c extending in the height direction on the outer circumference, and a stator 51b disposed on the outer circumferential side of a magnet of the rotor 51a so as to be opposite to the magnet adhered on the outer circumference of the magnet mounting part 51c for applying a rotary magnetic field to the rotor 51a. A reduction mechanism 40 is incorporated by this drive motor 51.

By thus incorporating the reduction mechanism 40 by the drive motor 51, if the reduction mechanism 40 and drive motor 51 are arranged coaxially, the entire structure may be formed thinly, and increase of lower volume of the outer casing 31 is suppressed.

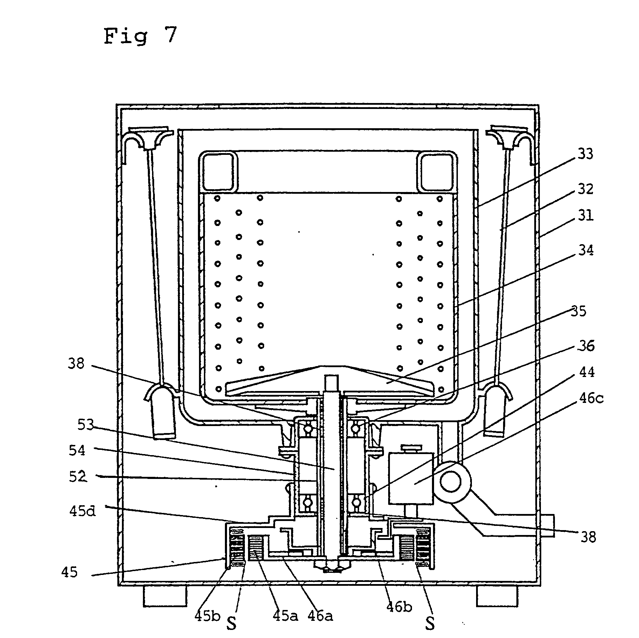

A fifth embodiment of the invention is described below while referring to Fig. 7. In Fig. 7, same components as in the first embodiment are identified with same reference numerals, and detailed description is omitted.

As shown in Fig. 7, a dewatering shaft 52 is hollow, and is supported by a dewatering bearing 36 provided in the center of the bottom of an outer tank 33. The upper end side of this dewatering shaft 52 is fixed to the bottom of a dewatering tank 34, and the dewatering tank 34 is rotated. A washing shaft 53 has its upper end side fixed on agitating blades 35 in order to rotate the agitating blades 35, and this washing shaft 53 is disposed coaxially in the hollow part of the dewatering shaft 52, and is supported by the washing bearing 38 disposed in the hollow part of the dewatering shaft 52.

The dewatering shaft 52 is incorporated in a case 54 made of upper and lower parts, and the lower part of the dewatering shaft 52 is supported by a dewatering bearing 44 fitted to the lower inner side of the case 54. This case 54 is fixed to the bottom side of the outer tank 33.

A drive motor 45 is for rotating the dewatering shaft 52 and washing shaft 53, and a rotor 45a of the drive motor 45 is coupled to the lower part of the washing shaft 53. Inside of the drive motor 45, a stator 45b is disposed so as to be opposite to the magnet disposed on the outer circumference of the rotor 45a, and a gap S is formed between the stator 45b and rotor 45a. This gap S is set in consideration of fluctuation of parts so that the outer circumference of the rotor 45a rotated by the rotary magnetic field of the stator 45b, that is, the magnet may not contact with the stator 45b, and is defined also in consideration of the eccentric amount of the rotor 45a by the force received during rotation of the output shaft rotated by the drive motor 45, that is, the washing shaft 53 and dewatering shaft 52.

The stator 45b is provided inside of a nearly cylindrical stator housing 45d, and the stator housing 45d is provided at the lower outer side of the case 54 mounting the dewatering bearing 35 at the lower inner side.

A clutch mechanism 46 for transmitting or not transmitting the rotation of the drive motor 45 to the dewatering shaft 52 is partly coupled to the rotor 45a of the drive motor 45. That is, the clutch mechanism comprises a torque transmitting unit for transmitting the torque of the rotor 45a of the drive motor 45, and a drive unit for contacting with or departing from the torque transmitting unit. This torque transmitting unit is composed of a fixed clutch 46a formed in part of the rotor 45a coupled to the lower part of the washing shaft 53, and a movable clutch 46b contacting with or departing from the fixed clutch 46a, and rotating together with the dewatering shaft 52 by a drive unit 46c composed of solenoid and others. The constitution of the clutch mechanism 46 is same as explained in Fig. 2 relating to the first embodiment, and its detailed description is omitted.

In this constitution, the operation is described below. First, in washing and rinsing stroke, power is supplied to the drive unit 46c, and by the generated magnetic force, the movable clutch 46b is moved to the side of the case 54, that is, upward, and the engagement of the fixed clutch 46a and the movable clutch 46b is cleared (see Fig. 3 (a)). As the engagement is cleared, rotation of the rotor 45a of the drive motor 45 is not transmitted to the dewatering shaft 52, and is transmitted only to the agitating blades 35 through the washing shaft 53, and mechanical force is applied to the laundry, and agitating operation is carried out. Thus, washing and rinsing of the laundry contained in the dewatering tank 34 are progressed.

After the washing and rinsing stroke, the dewatering stroke begins. In the dewatering stroke, the water in the dewatering tank 34 is discharged, and power supply to the drive unit 46c is stopped at the same time. At this time, the movable clutch 46b descends along the vertical grooves of the dewatering shaft 52 by the own weight (see Fig. 3 (b)), the fixed clutch 46a and the movable clutch 46b are engaged with each other. Therefore, by the engagement of the fixed clutch 46a and the movable clutch 46b, the dewatering shaft 52 and rotor 45a are coupled with each other, and rotation of the rotor 45a of the drive motor 45 is transmitted to the dewatering shaft 52, and the agitating blades 35 and the entire dewatering tank 34 rotate together. By the centrifugal force generated by rotation of the dewatering tank 34, the water in the laundry after washing and rinsing is wrung out into the outer tank 33 from multiple holes formed in the side of the dewatering tank 34. Thus, the laundry is dewatered automatically.

In this way, the laundry charged in the dewatering tank 34 finishes the full strokes of washing, rinsing and dewatering.

Herein, when assembling the drive motor 45, first a nearly cylindrical stator housing 45d mounting the annular stator 45b inside is fitted into the lower outer side of the case 54 mounting the dewatering bearing 39 36 at the lower inner side, and is attached to the lower part of the case 54. Then the rotor 45a is inserted so as to be positioned at the inner circumferential side of the annular stator 45b, and the rotor 45a is fixed in the lower part of the washing shaft 53. Therefore, usually, depending on the mounting position of the stator housing 45d or fluctuations of parts, the gap S between the rotor 45a and stator 45b may not be uniform on the whole circumference, and large gaps and small gaps occur. In the embodiment, however, since the rotor 45a is directly coupled with the washing shaft 53, alignment of the rotor 45a and washing shaft 53 is not necessary. Moreover, since the washing shaft 53 is disposed coaxially in the hollow dewatering shaft 52 through the washing bearing 38, and the dewatering shaft 52 is held in the case 54 through the dewatering bearing 36, the washing shaft 53 is also held in the case 54, and the rotor 45a coupled to the washing shaft 53 is also positioned by the case 54. Moreover, since the stator housing 45d for holding the stator 45b is positioned by the case 54, the stator 45b is also positioned by the case 54. Therefore, both stator 45b and rotor 45a are positioned by the case 54, and alignment of the stator 45b and rotor 45a is not necessary, and assembling is easy.

Still more, since the stator housing 45d is provided at the lower outer side of the case 54 mounting the dewatering bearing 44 for supporting the dewatering shaft 52 disposing the washing shaft 53 coaxially through the washing bearing 38 at the lower inner side, the rotor 45a fixed in the lower part of the washing shaft 53 through the inner and outer surfaces of the lower part of the case 54, and the stator 45b attached to the inner side of the nearly cylindrical stator housing 45d can be positioned, and the positioning precision is enhanced, and effects of deformation of the case 54 are hardly caused, and the gap S of the rotor 45a and stator 45b can be decreased.

The rotor 45a is directly coupled to the washing shaft 53, and any particular bearing for rotation of the rotor 45a is not necessary, so that the rotor 45a may be rotated freely by the washing shaft 53 supported in the dewatering shaft 52.

Since the rotor 45a is held by the washing bearing 38 and dewatering bearing 44, the eccentricity of the rotor 45a is suppressed, and the gap S between the rotor 45a and stator 45b is decreased, and therefore the torque can be increased without increasing the size of the drive motor 45.

The lower part of the case 54 is pinched between the dewatering bearing 44 and stator housing 45d, and the strength of the lower part of the case 54 is substantially increased so as to be hardly deformed, and therefore the gap S between the rotor 45a and stator 45b is further decreased, and therefore the torque can be further increased without increasing the size of the drive motor 45.

Meanwhile, clothes collide against the dewatering tank 34, and the dewatering shaft 52 receives an eccentric force, since rotation of the drive motor 45 is not transmitted to the dewatering shaft 52 in the washing and rinsing stroke by means of the clutch mechanism 46, eccentricity of the dewatering shaft 52 is not transmitted to the drive motor 45, so that eccentricity of the rotor 45a of the drive motor 45 is further suppressed.

In the dewatering stroke, the dewatering shaft 52 may possibly receive the eccentric force, but it is supported by the dewatering bearings 36, 44, and this force is received by the dewatering bearings 36, 44, so that the eccentricity of the rotor 45a of the drive motor 45 is still more suppressed.

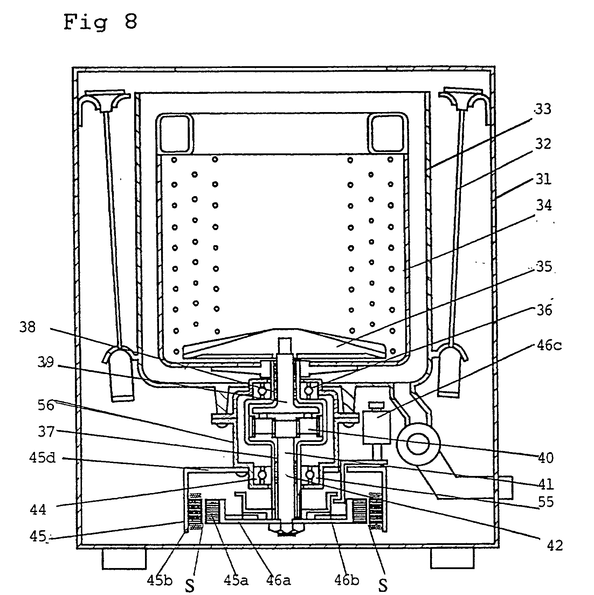

A sixth embodiment of the invention is described below while referring to Fig. 8. In Fig. 8, same components as in the fifth embodiment are identified with same reference numerals, and detailed description is omitted.

As shown in Fig. 8, a reduction mechanism 40 is incorporated in a dewatering shaft 37, and is designed to reduce the rotating speed by a gear group, and in order to prevent abnormal rotation due to imbalance of the dewatering tank 34 in dewatering operation, preferably, the reduction mechanism composed of a planet gear having plural gears arranged in a symmetrical profile is employed. At the output side of this reduction mechanism 40, the washing shaft 39 is connected, and a washing side input shaft 41 is connected to the input side. The washing side input shaft 41 is supported by an input bearing 42 disposed in the lower side hollow part of the dewatering shaft 37. A drive motor 45 is installed so as to rotate the dewatering shaft 37 and the washing side input shaft 41. A dent 55 is formed to be curved to the axial central side in the bottom of a case 56, and a dewatering bearing 44 is provided inside of the dent 55, and a stator housing 45d of the drive motor 45 is provided at the outside of the dent 55.

In this constitution, the operation is described below. First, in washing and rinsing stroke, power is supplied to the drive unit 46c, and by the generated magnetic force, the movable clutch 46b is moved to the side of the case 56 incorporating the reduction mechanism 40, that is, upward, and the engagement of the fixed clutch 46a and the movable clutch 46b is cleared (see Fig. 3 (a)). As the engagement is cleared, rotation of the rotor 45a of the drive motor 45 is not transmitted to the dewatering shaft 37, and is transmitted only to the agitating blades 35 through the washing side input shaft 41, reduction gear 40 and washing shaft 39, and mechanical force is applied to the laundry, and agitating operation is carried out. Thus, washing and rinsing of the laundry contained in the dewatering tank 34 are progressed.

After the washing and rinsing stroke, the dewatering stroke begins. In the dewatering stroke, the water in the dewatering tank 34 is discharged, and power supply to the drive unit 46c is stopped at the same time. At this time, the movable clutch 46b descends along the vertical grooves of the dewatering shaft 37 by the own weight (see Fig. 3 (b)), the fixed clutch 46a and the movable clutch 46b are engaged with each other. Therefore, by the engagement of the fixed clutch 46a and the movable clutch 46b, the dewatering shaft 37 and rotor 45a are coupled with each other, and rotation of the rotor 45a of the drive motor 45 is transmitted to the dewatering shaft 37, and the agitating blades 35 and the entire dewatering tank 34 rotate together. By the centrifugal force generated by rotation of the dewatering tank 34, the water in the laundry after washing and rinsing is wrung out into the outer tank 33 from multiple holes formed in the side of the dewatering tank 34. Thus, the laundry is dewatered automatically.

In this way, the laundry charged in the dewatering tank 34 finishes the full strokes of washing, rinsing and dewatering.

In the washing and rinsing stroke, for example, when the rotation of the rotor 45a of the drive motor 45 and the washing side input shaft 41 is reduced to 1/6 by the reduction mechanism 40 and is transmitted to the washing shaft 39 and agitating blades 35, ignoring the transmission efficiency, the torque is about six times larger than before reduction. Thus, in the structure of coupling the washing shaft 39 and washing side input shaft 41 through the reduction mechanism 40, if the torque of the drive motor 45 is small, the torque for rotating the agitating blades 35 can be increased, and increase of washing capacity and enhancement of cleaning performance can be realized without increasing the torque of the drive motor 45.

The lower part of the case 56 for incorporating the reduction mechanism 40 is curved to the axial center side, and a dent 55 is formed, and in the relation between the outside diameter of the reduction mechanism 40 and the outside diameter of the lower part of the dewatering shaft 37, the dent 55 may be formed easily without particularly increasing the outside diameter of the case 56, and the dewatering bearing 44 is fitted inside of the dent 55, and the stator housing 45d is formed on the outer circumference of the dent 55, and therefore the stator housing 45d can be positioned in the vertical direction in the dent 55, so that the drive motor 45 may be assembled easily.

Moreover, since the dent 55 is formed integrally in the lower part of the case 56, the rigidity of the entire case 56 is increased, and the dent 55 is hardly deformed, and therefore at the inner and outer sides of the dent 55, the dewatering bearing 44 and stator housing 45d can be positioned, that is, the rotor 45a coupled to the input bearing 42 disposed coaxially in the hollow part of the dewatering shaft 37 supported by the dewatering bearing 44, and the stator 45b provided in the stator housing 45d can be positioned, and not only the positioning precision is improved, but also the dent 55 is hardly deformed and deforming force is less, and the gap S between the rotor 45a and stator 45b can be further decreased. Therefore, the size of the drive motor 45 is decreased, while the torque can be increased.

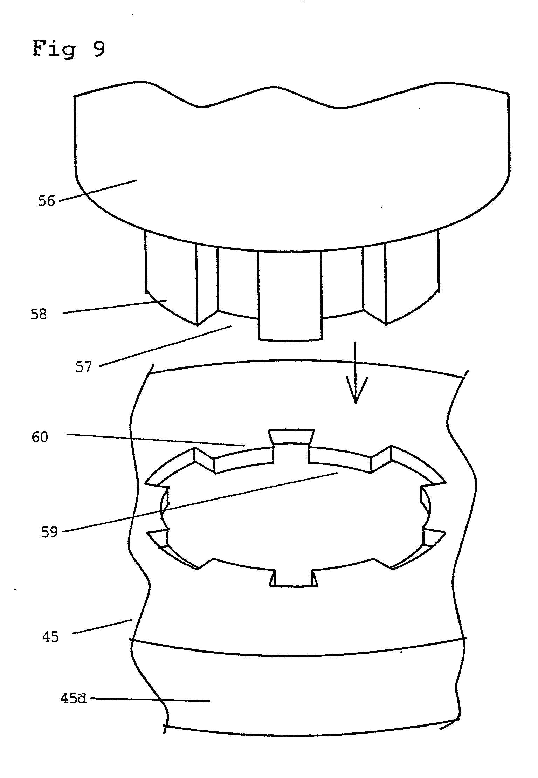

A seventh embodiment of the invention is described below while referring to Fig. 9. In Fig. 9, same components as in the sixth embodiment are identified with same reference numerals, and detailed description is omitted.

As shown in Fig. 9, a case 56 has a bump 58 provided on an outer surface 57 of a nearly cylindrical form in the lower part in the axial direction. In the middle of a stator housing 45d of a drive motor 45, a nearly cylindrical opening 59 is provided, and a recess 60 to be fitted with the bump 58 is formed in the inner side of this opening 59.

In this constitution, since the mutually fitting bump and recess 58, 60 are formed in the outer surface 57 of nearly cylindrical shape in the lower part of the case 56 and the inner side of the opening 59 of the stator housing 45d which are fitted to each other, when the rotor 45a rotates, the rotation reaction generated in the stator 45b and stator housing 45d can be received by the bump and recess 58, 60, so that it is possible to withstand a larger rotating torque of the drive motor 45.

Moreover, since the bump and recess 58, 60 are positioned in the rotating direction when fitting the outer surface 57 of nearly cylindrical form in the lower part of the case 56 into the opening 59 of the stator housing 45d, positioning can be adjusted automatically when fixing the stator housing 45d to the case 56 with a screw from the side, and assembling is very easy.

Also by the bump and recess 58, 60, the rigidity of the lower part of the case 56 and the stator housing 45d can be increased, and the strength is further improved, and therefore deformation of the lower part of the case 56 and the stator housing 45d during rotation of the rotor 45a is decreased, and the gap S between the rotor 45a and stator 45b is further narrowed.

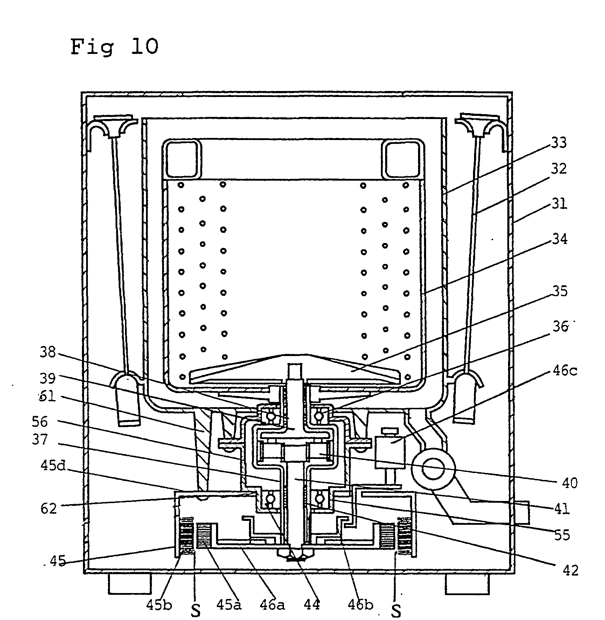

An eighth embodiment of the invention is described below while referring to Fig. 10. In Fig. 10, same components as in the sixth embodiment are identified with same reference numerals, and detailed description is omitted.

As shown in Fig. 10, a stator housing 45d of the drive motor 45 is composed to hold the top panel center by fitting to the root of a dent 55 curved to the axial central side in the lower part of a case 56. A boss 61 is formed integrally from the bottom of an outer tank 33, and a mounting part 62 formed on the top panel outer circumference of the stator housing 45d is fitted to the boss 61, and the stator housing 45d is fixed directly to the outer tank 33 through the boss 61.

In this constitution, since the top panel center of the stator housing 45d is fitted to the root of the dent 55 curved to the axial central side in the lower part of the case 56, and the top panel outer circumference of the stator housing 45d is directly fitted to the outer tank 33 through the boss 61, as compared with the structure of being held in the outer tank 33 through the case 56 as being fixed to the case 56, the stability of the stator housing 45d during rotation of the rotor 45a is improved, and the oscillation is decreased so that stable rotation of the washing side input shaft 41 and rotor 45a is obtained, and the gap S between the rotor 45a and stator 45b is further narrowed, and the torque can be increased without increasing the size of the drive motor 45.

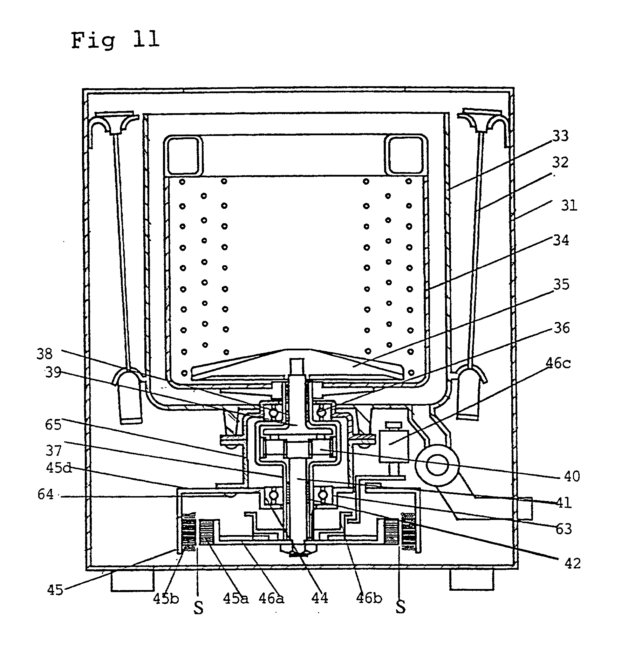

A ninth embodiment of the invention is described below while referring to Fig. 11. In Fig. 11, same components as in the sixth embodiment are identified with same reference numerals, and detailed description is omitted.

As shown in Fig. 11, a stator housing 45d of a drive motor 45 has an accommodating part 63 provided on the top panel center, and a dewatering bearing 44 is contained in this accommodating part 63. A mounting part 64 is provided in the stator housing 45d, and it is fitted to a case 65.

In this constitution, since the accommodating part 63 for containing the dewatering bearing 44 is provided on the top panel center of the stator housing 45d of the drive motor 45, the stator 45b and the dewatering bearing 44 can be held by one stator housing 45d, and the positioning precision of the stator 45b and the rotor 45a supported on the dewatering bearing 44 through a washing side input shaft 41 and a dewatering shaft 37 can be further enhanced, and the gap S of the stator 45b and rotor 45a is smaller, so that the torque can be increased without increasing the size of the drive motor 45.

Moreover, since the lower part of the case 65 is not holding the dewatering bearing 44, the lower part can be opened toward the outside, and the case 65 can be fixed to the mounting part 64 of the top panel of the stator housing 45d, and therefore oscillation of the stator housing 45d during rotation of the rotor 45a is smaller, so that a stable rotation of the rotor 45a is obtained, and the gap S of the rotor 45a and stator 45b is smaller, so that the torque can be increased without increasing the size of the drive motor 45.

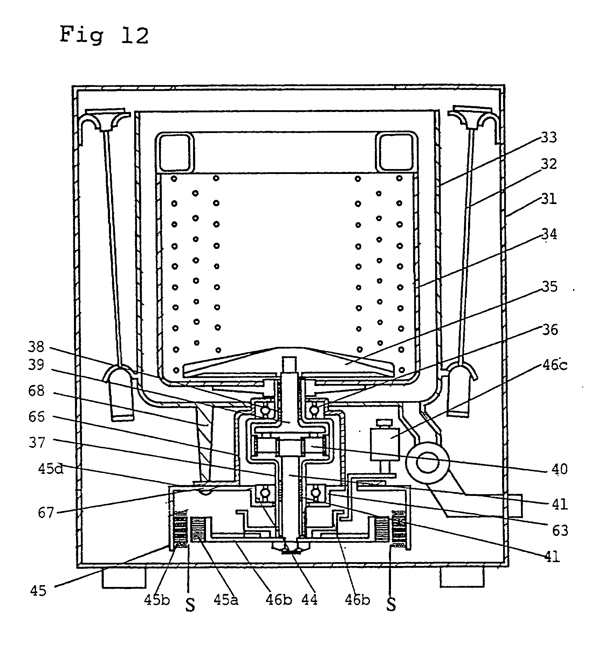

A tenth embodiment of the invention is described below while referring to Fig. 12. In Fig. 12, same components as in the sixth embodiment are identified with same reference numerals, and detailed description is omitted.

As shown in Fig. 12, a case 66 has its bottom opened to the outside, and is fixed to a boss 68 formed integrally from the bottom of an outer tank 33, together with a mounting part 67 provided on the top panel outer circumference of a stator housing 45d of a drive motor 45.

In this constitution, since the case 66 is fixed to the outer tank 33 through the boss 68 of the outer tank 33 from the bottom opened to the outside, it is not necessary to fix the case 66 to the outer tank 33 at other position, and the case structure is simple and is composed of one component.

Moreover, since the case 66 and stator housing 45d are fixed together with the boss 68 formed integrally from the bottom of the outer tank 33, the case 66 and stator housing 45d can be mounted simultaneously on the outer tank 33, and assembling is easy.

All of the parts located beneath the outer tank 33, that is, the case 66, dewatering shaft 37, stator housing 45d, and rotor 45a can be mounted in one direction only from bottom to top, and assembling is further simplified.

The stator housing 45d is fixed directly to the outer tank 33 through the boss 68, the stability of the stator housing 45d during rotation of the rotor 45a is improved, oscillation is smaller, and a stable rotation of the washing side input shaft 41 and rotor 45a is obtained, and the gap S of the rotor 45a and stator 45b is smaller, so that the torque can be increased without increasing the size of the drive motor 45.

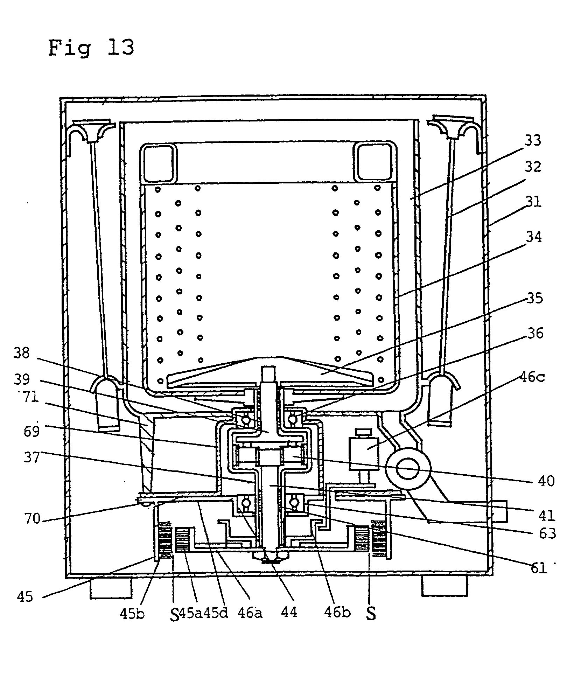

An eleventh embodiment of the invention is described below while referring to Fig. 13. In Fig. 13, same components as in the sixth embodiment are identified with same reference numerals, and detailed description is omitted.

As shown in Fig. 13, a case 69 has its bottom opened to the outside, and is fixed to a boss 71 formed integrally from the bottom of an outer tank 33, together with a mounting part 70 provided on the top panel outer circumference positioned outside from the side of a stator housing 45d of a drive motor 45.

In this constitution, since the stator housing 45d is fixed to the outer tank 33 through the boss 71, from the mounting part 70 provided on the top panel outer circumference positioned outside of its side, oscillation of the stator housing 45d during rotation of the rotor 45a is smaller, and the gap S of the rotor 45a and stator 45b is smaller, so that the torque can be increased without increasing the size of the drive motor 45.

Moreover, since the top panel outer circumference of the stator housing 45d having the mounting part 70 to the outer tank 33 is positioned outside of the its side, when mounting the stator housing 45d on the outer tank 33, its position is inside of the stator housing 45d and it cannot be assembled unless it is always positioned inside of the stator 45b, therefore it can be easily installed in the outer tank 33, regardless of the size of the stator 45b, without damaging the stator 45b and others in the stator housing 45d.

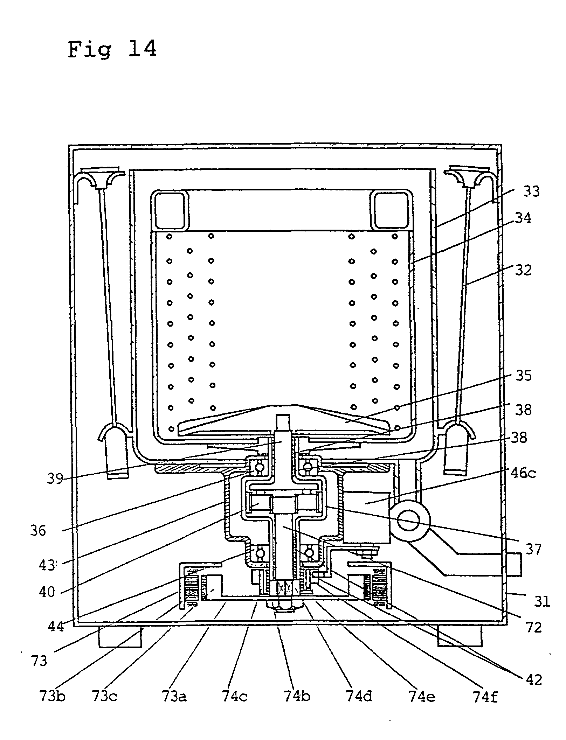

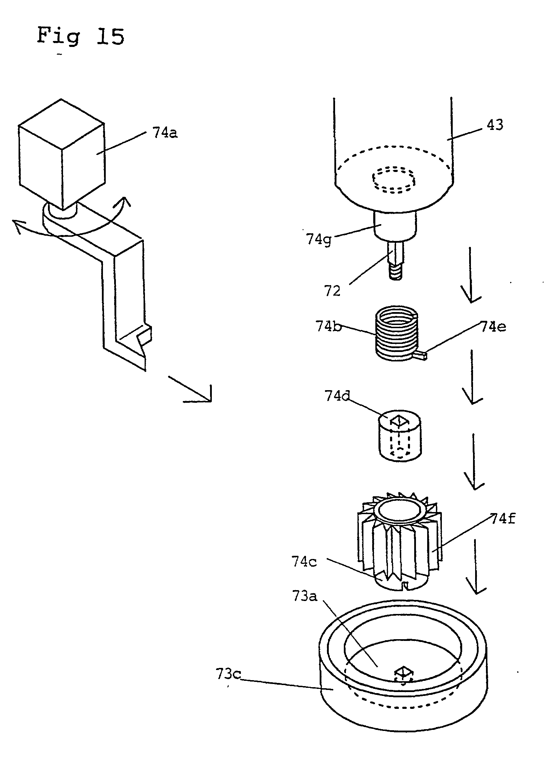

A twelfth embodiment of the invention is described below while referring to Fig. 14 and Fig. 15. In Fig. 14, same components as in the first embodiment are identified with same reference numerals, and detailed description is omitted.

As shown in Fig. 14, a drive motor 73 is mounted on a washing side input shaft 72 of a reduction mechanism 40. The drive motor 73 is composed of a disk-shaped rotor 73a having a magnet mounting part 73c extended in the height direction on its outer circumference, and a stator 73b for applying a rotary magnetic field to the rotor 73a, being disposed on the outer circumferential side of the magnet of the rotor 73a so as to be opposite to the magnet adhered on the outer circumference of the magnet mounting part 73c. The washing side input shaft 72 of the reduction mechanism 40 is coupled to the center of rotation of the rotor 73a of the drive motor 73.

A clutch mechanism 74 is, as shown in Fig. 15, composed of a torque transmitting unit for transmitting the torque of the drive motor 73, and a drive unit for fixing or releasing the torque transmitting unit, and more specifically the torque transmitting unit includes a clutch input boss 74d provided in a space enclosed by the rotor 73a and magnet mounting part 73c, a clutch output boss 74g provided on the dewatering shaft 37, a clutch spring 74b for fixing and releasing, a release sleeve 74c fitted to the control pawl 74e of the clutch spring 74b for defining the motion of the control pawl 74e, and clutch driving means 74a engaged with a stopper 74f of the release sleeve 74c for controlling rotation and stopping of the release sleeve 74c.

In this constitution, the operation is described below. In the washing and rinsing stroke, power supply to the clutch driving means 74a for operating the clutch mechanism 74 is stopped. The clutch driving means 74a is engaged with the stopper 74f of the release sleeve 74c, and the release sleeve 74c cannot rotate freely. The control pawl 74e of the clutch spring 74b fitted into the release sleeve 74c is fixed, and the clutch spring 74b loosens the tightening between the clutch input boss 74d fitted into the washing side input shaft 72 and the clutch output boss 74g provided in the dewatering shaft 37, so that the torque may not be transmitted. The power of the drive motor 73 is transmitted only to the agitating blades 35 through the washing shaft 39, and a mechanical force is applied to the laundry. In this manner, washing and rinsing of the laundry contained in the dewatering tank 34 are progressed.

After the washing and rinsing stroke, the dewatering stroke begins automatically, and in this dewatering stroke, the water in the dewatering tank 34 is discharged, and power is supplied to the clutch driving means 74a for moving the clutch mechanism 74. The clutch driving means 74a is released from the stopper 74f of the release sleeve 74c, so that the release sleeve 74c is free to rotate. As a result, the control pawl 74e of the clutch spring 74b fitted in the release sleeve 74c is set free, and the clutch spring 74b tightens the clutch input boss 74d fitted into the washing side input shaft 72 and the clutch output boss 74g provided in the dewatering shaft 37, so that the torque may be transmitted. The washing side input shaft 72 and the dewatering shaft 37 are coupled, and the dewatering tank 34 is put in rotation. As the dewatering tank 34 rotates, the water in the laundry after washing and rinsing is wrung out into the outer tank 33 from multiple holes provided in the side of the dewatering tank 34 by centrifugal force. Thus, the laundry is dewatered automatically.

In this way, the laundry charged in the dewatering tank 34 automatically finishes the strokes of washing, rinsing and dewatering.

Thus, according to the embodiment, the washing shaft 39 and dewatering shaft 37 are in a coaxial double structure, and from the side of the agitating blades 35, the reduction mechanism 40, clutch mechanism 74, and drive motor 73 are arranged sequentially, and since they are provided on the same axial line, the drive motor 73 and mechanical section are integrated, and the center of gravity comes to the center of the outer tank 33, thereby eliminating the imbalance as experienced in the prior art when the drive motor is not located in the center of the outer tank 33, and further suppressing vibration when dewatering. Moreover, since the reduction gear 40 and dewatering shaft 37 are directly rotated by the drive motor 73, the conventional belt is not necessary, and problems of belt slip and durability do not exist.

Moreover, part of the torque transmitting unit of the clutch mechanism 74, that is, the clutch input boss 74d is enclosed in the rotor 73a of the drive motor 73, and therefore, the washing machine reduced in thickness and size is presented.

The type of the drive motor 73 is not limited to the constitution of the embodiment as far as a space is formed inside the rotor 73a of the drive motor 73.

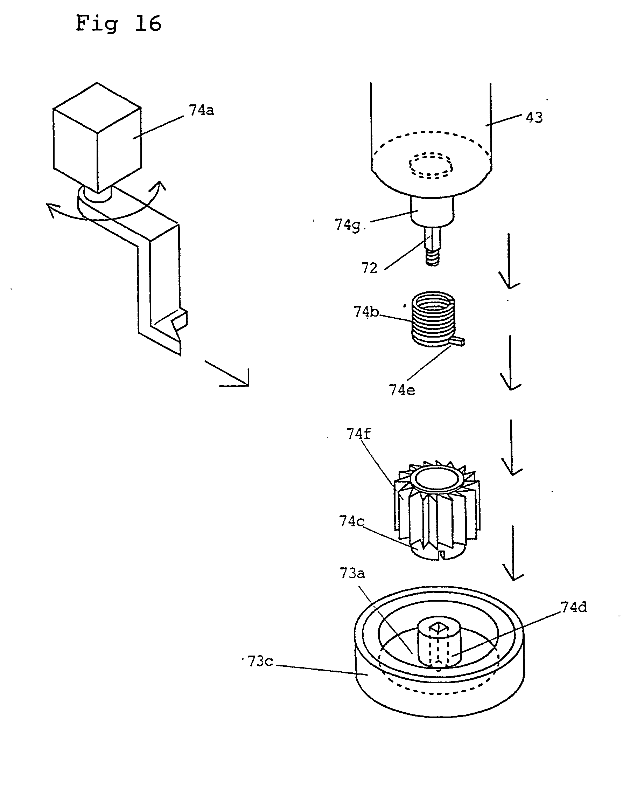

A thirteenth embodiment of the invention is described below while referring to Fig. 16. In Fig. 16, same components as in the twelfth embodiment are identified with same reference numerals, and detailed description is omitted.

As shown in Fig. 16, a clutch input boss 74d is part of a clutch mechanism 74, and this clutch input boss 74d is integrated with a rotor 73a of a drive motor 73.

In this constitution, the rotor 73a of the drive motor 73 is formed at high precision in a coaxial structure, and since the torque is transmitted directly without passing through the washing side input shaft 72, a high torque can be transmitted to the dewatering shaft 37, and the dewatering tank 34 can be rotated at high torque, and the starting time is shortened, and the washing machine not causing starting failure due to bubbles can be presented.

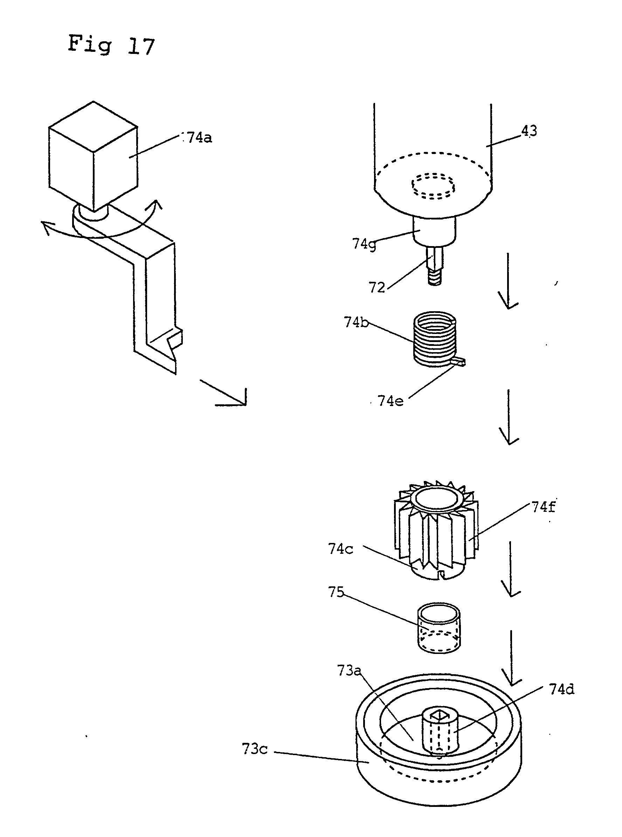

A fourteenth embodiment of the invention is described below while referring to Fig. 17. In Fig. 17, same components as in the twelfth embodiment are identified with same reference numerals, and detailed description is omitted.

As shown in Fig. 17, a clutch input boss 74d is part of a clutch mechanism 74, and this clutch input boss 74d is integrated with a rotor 73a of a drive motor 73, and the surface of the clutch input boss 74d is covered with a clutch boss ring 75 of other material.

In this constitution, a material excellent in abrasion resistance which is a required characteristic for the clutch input boss 74d, and a material excellent in toughness, light in weight and superior in processability as required for the rotor 73a of the drive motor 73 can be separately selected.

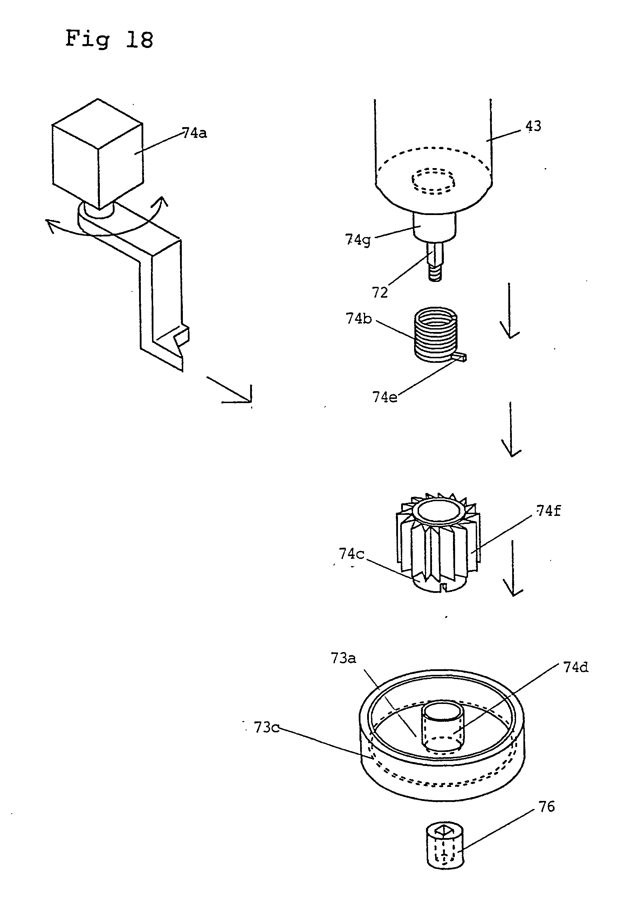

A fifteenth embodiment of the invention is described below while referring to Fig. 18. In Fig. 18, same components as in the twelfth embodiment are identified with same reference numerals, and detailed description is omitted.

As shown in Fig. 18, a clutch input boss 74d is a thin magnetic material, integrated with a rotor 73a of a drive motor 73, and the rotor 73a is formed by press-fitting a rotor boss 76.

In this constitution, the rotor 73a and the clutch input boss 74d can be fabricated by a same die, and the precision of parts is enhanced, and the number of parts is curtailed, and the assembling performance is enhanced, and the clutch mechanism 74 is reduced in thickness and size.

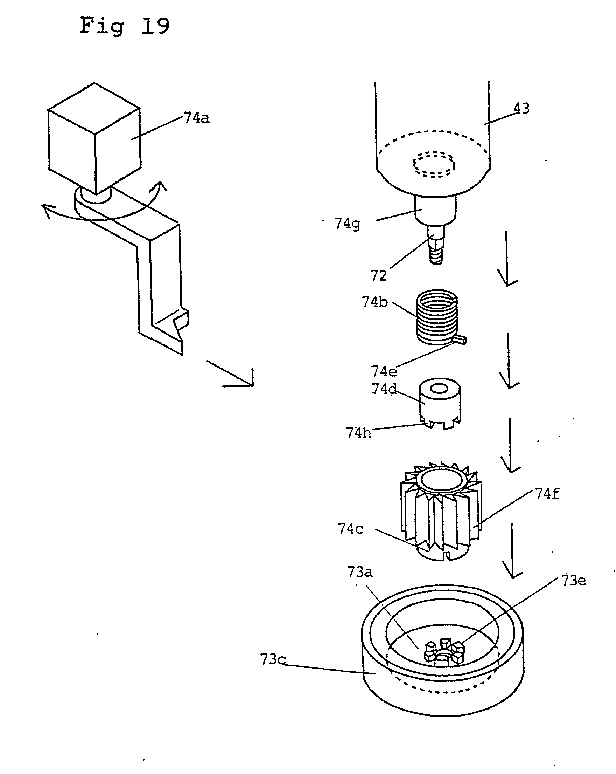

A sixteenth embodiment of the invention is described below while referring to Fig. 19. In Fig. 19, same components as in the twelfth embodiment are identified with same reference numerals, and detailed description is omitted.

As shown in Fig. 19, engaging clutches 74h, 73e are provided to be engaged respectively with a rotor 73a of a drive motor 73 and a clutch input boss 74d, and by their engagement with each other, the torque generated in the rotor 73a of the drive motor 73 is transmitted to the clutch input boss.

In this constitution, by engagement of the engaging clutches 74h, 73e provided at the rotor 73a of the drive motor 73 and the clutch input boss 74d, the torque of the rotor 73a can be transmitted to the clutch input boss 74d through the engaging clutches 73e, 74h without passing through the washing side input shaft 72. Therefore, the mounting hole of the clutch input boss 74d and washing side input shaft 72 may be a round hole, and the dewatering tank 34 is rotated at high torque regardless of the strength of the washing side input shaft 72.

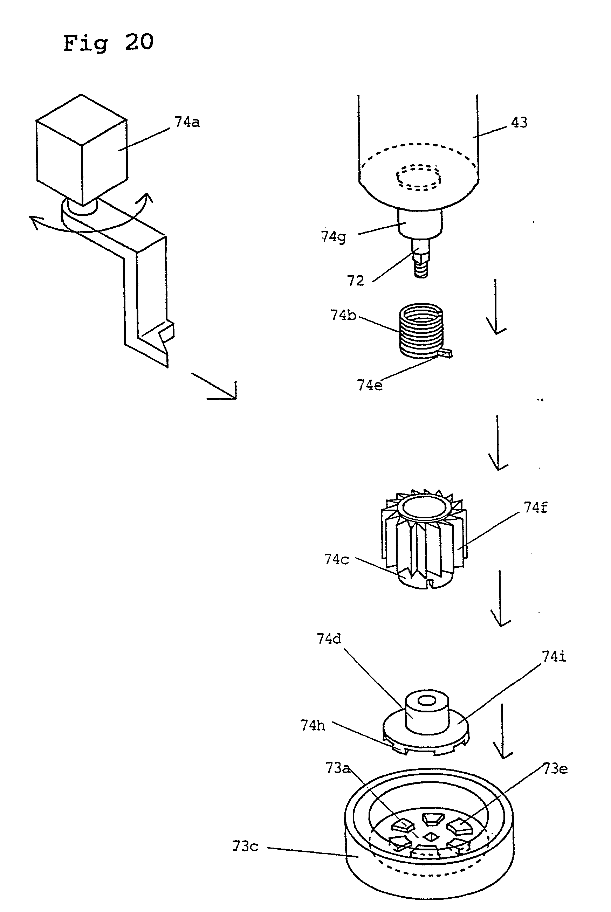

A seventeenth embodiment of the invention is described below while referring to Fig. 20. In Fig. 20, same components as in the twelfth embodiment are identified with same reference numerals, and detailed description is omitted.

As shown in Fig. 20, an engaging clutch 73e is formed in a rotor 73a of a drive motor 73, and a flange 74i is formed in a clutch input boss 74d, and an engaging clutch 74h for transmitting torque is provided outside of the boss outside diameter.

In this constitution, the engaging clutches 73e, 74h have a certain distance provided in the radial direction, and therefore the shearing force is smaller, and inexpensive materials may be used for the rotor 73a and flange 74i of the clutch input boss 74d, and run-out of the rotor 73a can be curbed by the flange 74i of the clutch input boss 74d, so that driving at high torque is realized.

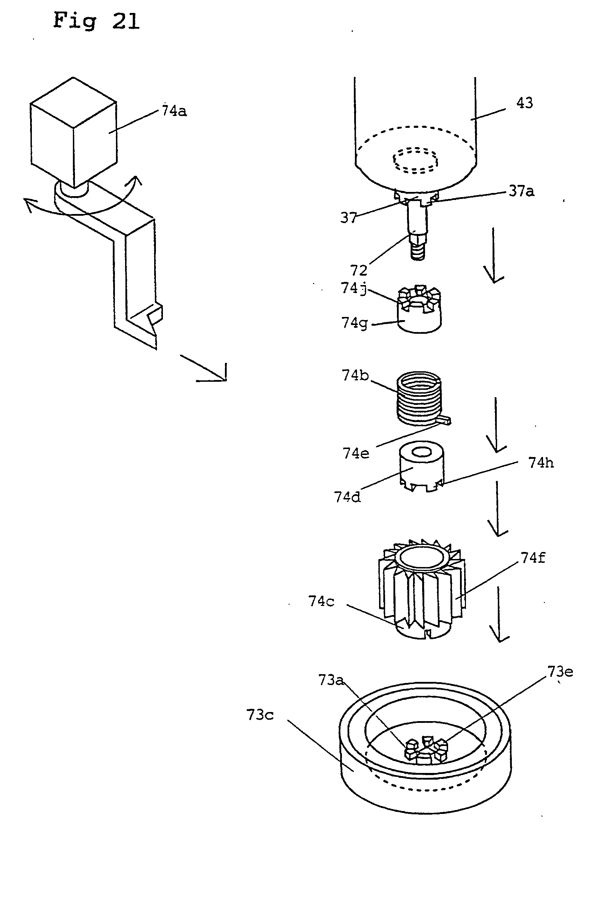

An eighteenth embodiment of the invention is described below while referring to Fig. 21. In Fig. 21, same components as in the twelfth embodiment are identified with same reference numerals, and detailed description is omitted.

As shown in Fig. 21, a clutch output boss 74d is made of other part than a dewatering shaft 37, and engaging clutches 37a, 74j for transmitting torque are provided in the dewatering shaft 37 and clutch output boss 74d, and by the engagement of each other, the torque generated in the rotor 73a of the drive motor 73 is transmitted to the dewatering shaft 37.

In this constitution, the rotor 73a of the drive motor 73 and the clutch mechanism 74 can be assembled by combining with the clutch spring 74d and first assembling and incorporating into the dewatering shaft 37, and therefore the assembling performance is enhanced, the clutch mechanism alone can be inspected, and only the clutch mechanism may be replaced.

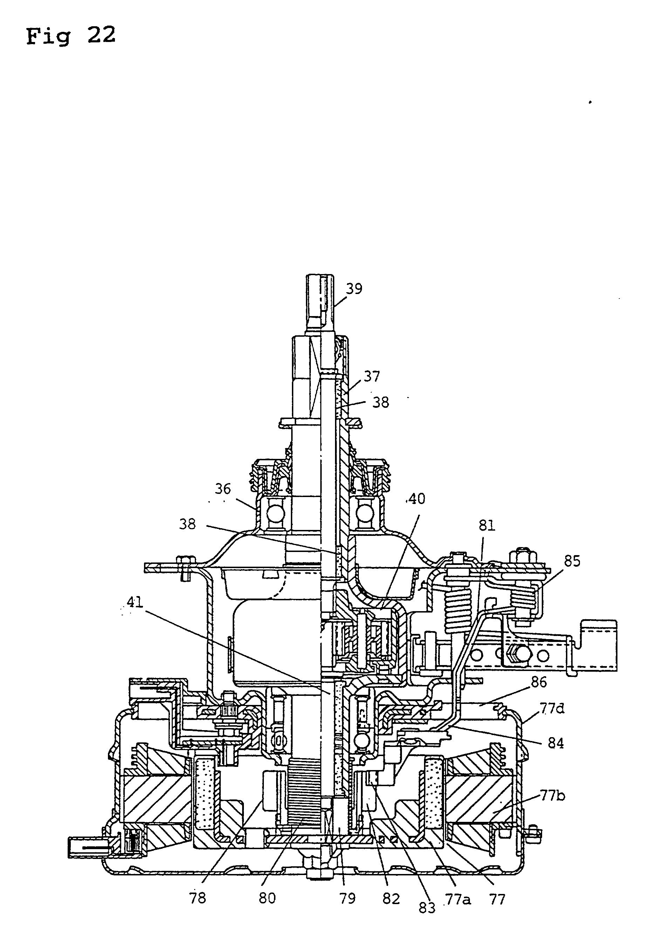

A nineteenth embodiment of the invention is described below while referring to Fig. 22. The entire constitution of this washing machine is same as in the first embodiment, and detailed description is omitted.

As shown in Fig. 22, a dewatering tank (not shown) is fixed at the upper end of a dewatering shaft 37 supported by a dewatering bearing 36 provided in the bottom of an outer tank (not shown), and agitating blades (not shown) are disposed in a hollow space of the dewatering shaft 37 so as to be coaxial with the dewatering shaft 37, and fixed at the upper end of a washing shaft 39 supported by a washing bearing 38 provided in the hollow space of the dewatering shaft 37. The lower end of the washing shaft 39 is connected to the output side of a reduction mechanism 40.

A stator housing 77d for composing a drive motor 77 is attached to the reduction mechanism 40 with the cup-shaped opening downward, and a stator 77b for giving a rotary magnetic field to a rotor 77a is press-fitted in the stator housing 77d, and the drive motor 77 is composed with the rotor 77a opposite to this stator 77b, the reduction mechanism 40 and drive motor 77 are coaxially disposed, and the drive motor 77 is mounted on the washing side input shaft 41 of the reduction mechanism 40.

A clutch mechanism 78 is for changing over the rotation of the drive motor 77 to either the dewatering shaft 37 or washing shaft 39, and is composed of a clutch box 79 having a fitting hole shape in the portion of cutting four sides provided in the washing side input shaft 41, a clutch spring 80, and a release sleeve 82 for transmitting clutch changeover force of clutch driving means 81 to the clutch spring 80, and is disposed in the space provided inside of the rotor 77a.

The clutch driving means 81 is for driving the clutch mechanism 78, and is composed of a clutch pawl 83, a clutch lever 84, clutch changeover means (not shown) including geared drive motor or the like for rotating the clutch lever 84, and a clutch lever spring 85.

A hole 86 is provided in the stator housing 77d, the clutch lever 84 of the clutch driving means 81 is inserted in this hole 86, and by driving the clutch driving means 81 from outside by the clutch changeover means, the clutch lever 84 is rotated. The other constitution is same as in the first embodiment.

In this constitution, the operation is described below. In the washing and rinsing stroke, the clutch driving means 81 releases the clutch spring 80 of the clutch mechanism 78, so that torque is not transmitted to the dewatering shaft 37. The power of the drive motor 77 is transmitted only to the agitating blades through the washing shaft 39, and mechanical force is applied to the laundry. Thus, washing and rinsing of the laundry contained in the dewatering tank are progressed.

After the washing and rinsing stroke, the dewatering stroke begins automatically, and in this dewatering stroke, the water in the dewatering tank is discharged, and the clutch spring 80 of the clutch mechanism 78 is driven, so that torque can be transmitted to the dewatering shaft 37. By the power of the drive motor 77, the washing side input shaft 41 and dewatering shaft 37 are coupled, and the dewatering tank is rotated.

As the dewatering tank rotates, the water in the laundry after washing and rinsing is wrung out into the outer tank from multiple holes provided in the side of the dewatering tank by centrifugal force. Thus, the laundry is dewatered automatically. In this way, the laundry charged in the dewatering tank automatically finishes the strokes of washing, rinsing and dewatering.

Thus, according to the embodiment, the washing shaft 39 and dewatering shaft 37 are in a coaxial double structure, and from the side of the agitating blades, the reduction mechanism 40 and drive motor 77 are arranged sequentially, and since they are provided on the same axial line, the drive motor 77 and reduction mechanism 40 are integrated, and the center of gravity comes to the center of the outer tank, thereby eliminating the imbalance as experienced in the prior art when the drive motor 77 is not located in the center of the outer tank, and further suppressing vibration when dewatering. Moreover, since the reduction gear 40 and dewatering shaft 37 are directly rotated by the drive motor 77, the conventional belt is not necessary, and the number of parts can be curtailed.

Moreover, since the drive motor 77 is composed inside of the stator housing 77d, if water overflows from the outer tank due to some cause, water does not invade into the drive motor 77, or if the area of the clutch lever 84 is touched by hand by mistake, the finger is not caught in the drive motor 77, so that the safety may be enhanced.

The stator housing 77d has the hole 86 for inserting the clutch lever 84 of the clutch driving means 81, and therefore, in a simple constitution, the clutch mechanism 78 of high reliability is composed, and the drive mechanism formed compact in the axial direction is obtained.

In this embodiment, the clutch mechanism 78 is composed of clutch boss 79, clutch spring 80, and release sleeve 82, and by driving the clutch drive means 81 from outside, rotation of the drive motor 77 is changed over to either the dewatering shaft 37 or the washing shaft 39, but same as in the first embodiment shown in Fig. 1, the clutch mechanism 46 may be composed of the torque transmitting unit for transmitting torque of the rotor 45a of the drive motor 45 and the drive unit for contacting with or departing from the torque transmitting unit, and the same action and effect are obtained.

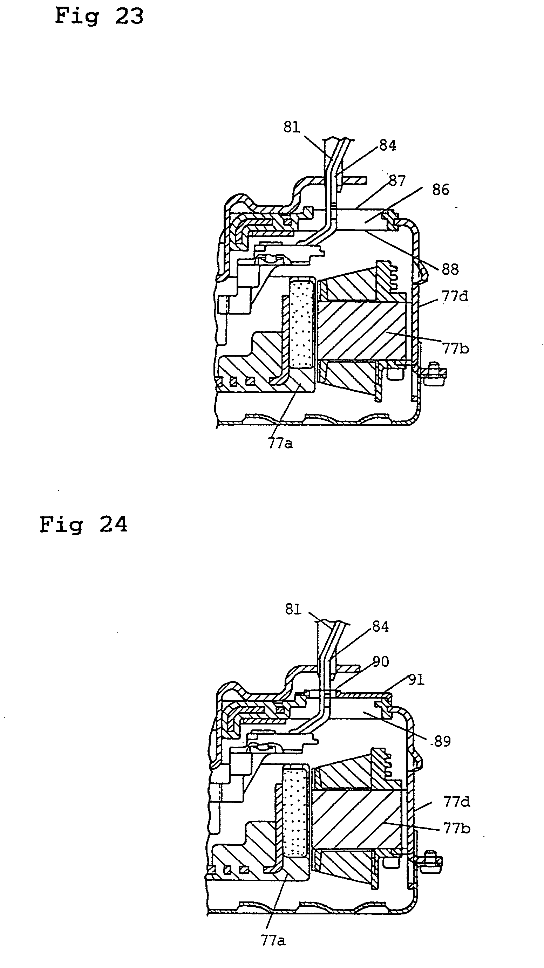

A twentieth embodiment of the invention is described below while referring to Fig. 23.

As shown in Fig. 23, a stator housing 77d has a hole 86 for inserting and rotating a clutch lever 84 of clutch driving means 81, and this hole 86 is formed so that the opening area is different between the inlet side 87 and outlet side 88 for inserting the clutch lever 84. The other constitution is same as in the nineteenth embodiment.

Explaining the action in this constitution, the opening area of the hole 86 may be an area of minimum required limit, and the strength of the stator housing 77d is enhanced, and the drive mechanism is formed shortly in the axial direction.

A twenty-first embodiment of the invention is described below while referring to Fig. 24.

As shown in Fig. 24, a stator housing 77d has a hole 89 for inserting a clutch lever 84 of clutch driving means 81, and this hole 89 has a size and shape necessary for inserting the clutch lever 84, and after inserting the clutch lever 84, it is coupled with a cover 91 having a hole 90 in a size and shape necessary for rotating the clutch lever 84. The other constitution is same as in the nineteenth embodiment.

Explaining the action in this constitution, since the hole 89 provided in the stator housing 77d is coupled with the cover 91 having the hole 90 in a size and shape necessary for rotating the clutch lever 84, if water overflows from the outer tank due to some cause, the water falling on the floor hardly bounces to get into the stator housing 77d from the hole 90 in the cover 91. Or, if the area of the clutch lever 84 is touched by hand by mistake, the finger is not caught in the stator housing 77d, so that the safety may be enhanced.

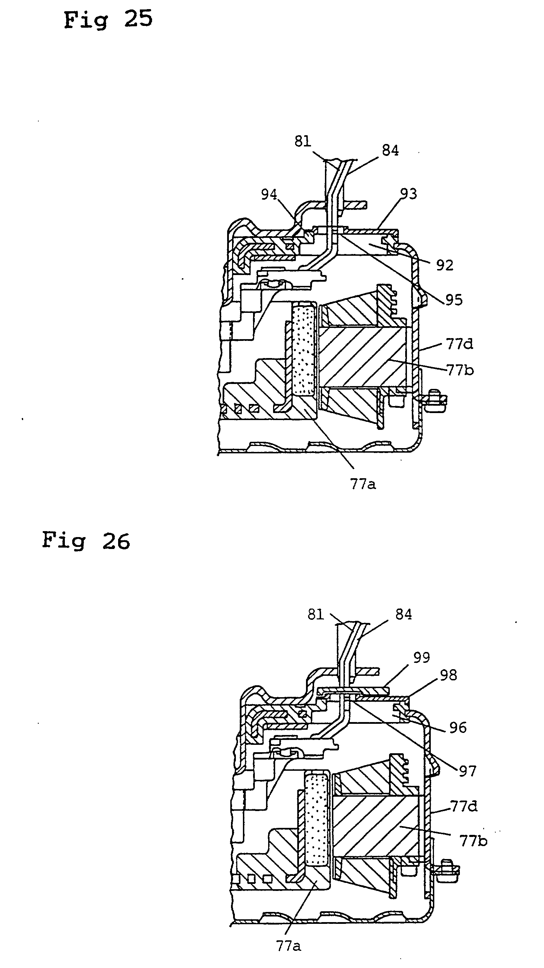

A twenty-second embodiment of the invention is described below while referring to Fig. 25.

As shown in Fig. 25, a stator housing 77d has a hole 92 for inserting a clutch lever 84 of clutch driving means 81, and in part of the surrounding of this hole 92, there is a bump 94 to be fitted with a cover 93. The cover 93 has a hole 95 in a size and shape necessary for rotating the clutch lever 84. The other constitution is same as in the twenty-first embodiment.

Explaining the action in this constitution, since the bump 94 to be fitted with the cover 93 is provided in part of the surrounding of the hole 92 provided in the stator housing 77d, if water overflows from the outer tank due to some cause, the water falling on the floor hardly bounces to get into the stator housing 77d from the hole 95 in the cover 93. Or, if the area of the clutch lever 84 is touched by hand by mistake, the finger is not caught in the stator housing 77d, so that the safety may be enhanced.

A twenty-third embodiment of the invention is described below while referring to Fig. 26.

As shown in Fig. 26, a stator housing 77d has a hole 96 for inserting a clutch lever 84 of clutch driving means 81, and this hole 96 is provided with a cover 98 having a hole 97 in a size and shape necessary for rotating the clutch lever 84. A lid 99 is composed to cover a hole 97 opened in the cover 98, in cooperation with the clutch lever 84. Of course, if the clutch lever 84 rotates, the lid 99 is always covering the hole 97. The other constitution is same as in the nineteenth embodiment.

Explaining the action in this constitution, since the hole 97 formed in the cover 98 is covered by the lid 99 cooperating with the clutch lever 84, if water overflows from the outer tank due to some cause, the water falling on the floor does not bounce to get into the stator housing 77d from the hole 97 in which the clutch lever 84 rotates. Or, if the area of the clutch lever 84 is touched by hand by mistake, the finger is not caught in the stator housing 77d, so that the safety may be enhanced.

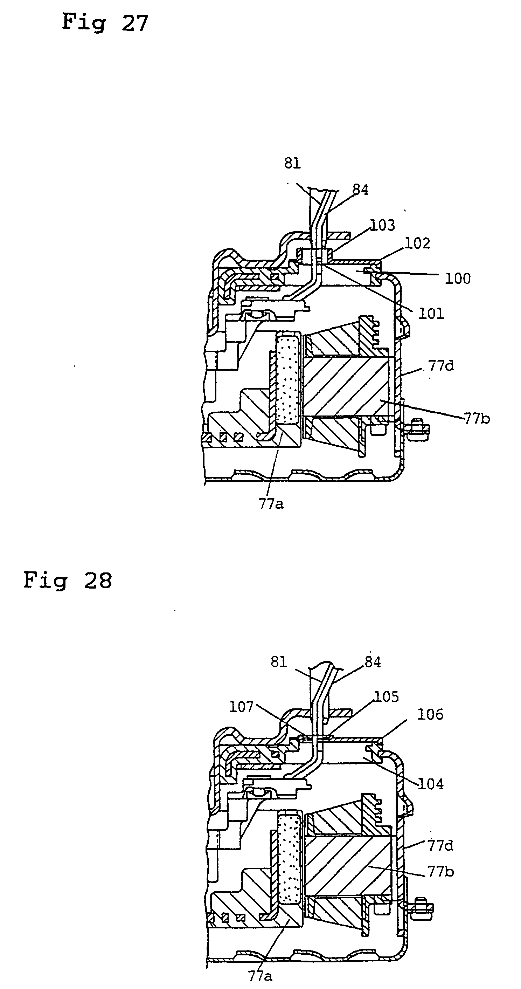

A twenty-fourth embodiment of the invention is described below while referring to Fig. 27.

As shown in Fig. 27, a stator housing 77d has a hole 100 for inserting a clutch lever 84 of clutch driving means 81, and this hole 100 is provided with a cover 102 having a hole 101 in a size and shape necessary for rotating the clutch lever 84. A wall is provided in the hole 101 by a rib 103, and the position of the hole 101 is heightened. The other constitution is same as in the nineteenth embodiment.

Explaining the action in this constitution, since the position of the hole 101 is heightened by forming the rib 103 as a wall in the hole 101 provided in the cover 102 in a size and shape necessary for rotating the clutch lever 84, if water overflows from the outer tank due to some cause, the water falling on the floor hardly bounces to get into the stator housing 77d from the hole 101 in which the clutch lever 84 rotates. Or, if the area of the clutch lever 84 is touched by hand by mistake, the finger is not caught in the stator housing 77d, so that the safety may be enhanced.

A twenty-fifth embodiment of the invention is described below while referring to Fig. 28.

As shown in Fig. 28, a stator housing 77d has a hole 104 for inserting a clutch lever 84 of clutch driving means 81, and this hole 104 is provided with a cover 106 having a hole 105 in a size and shape necessary for rotating the clutch lever 84. The surrounding of the hole 105 is composed of a seal of a rubber-like elastic piece 107. The other constitution is same as in the nineteenth embodiment.

Explaining the action in this constitution, since the surrounding of the hole 105 in a size and shape necessary for rotating the clutch lever 84 is composed of a seal of rubber-like elastic piece 107, if water overflows from the outer tank due to some cause, the water falling on the floor hardly bounces to get into the stator housing 77d from the hole 105 in which the clutch lever 84 rotates. Or, if the area of the clutch lever 84 is touched by hand by mistake, the finger is not caught in the stator housing 77d, so that the safety may be enhanced.

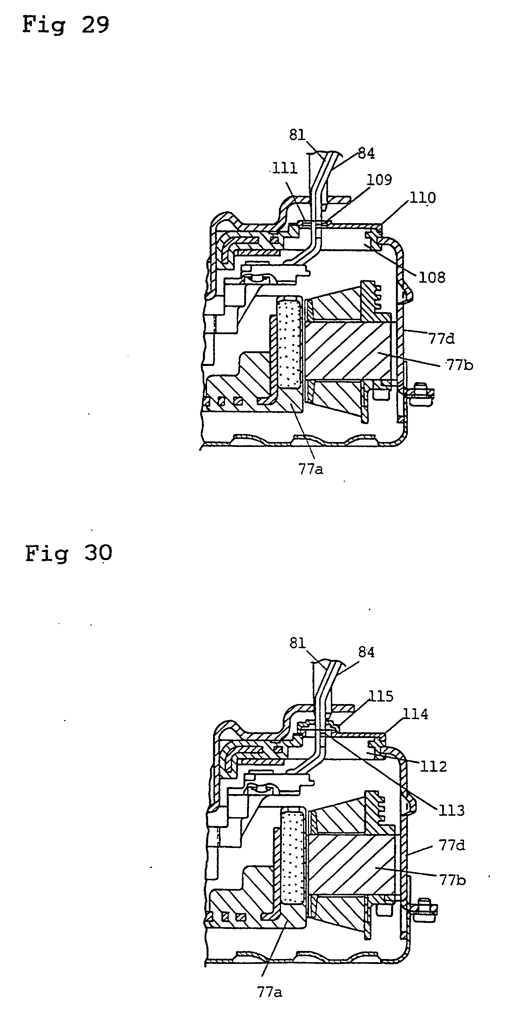

A twenty-sixth embodiment of the invention is described below while referring to Fig. 29.

As shown in Fig. 29, a stator housing 77d has a hole 108 for inserting a clutch lever 84 of clutch driving means 81, and this hole 108 is provided with a cover 110 having a hole 109 in a size and shape necessary for rotating the clutch lever 84. The surrounding of the hole 109 is composed of a brush-shaped seal 111. The other constitution is same as in the nineteenth embodiment.

Explaining the action in this constitution, since the surrounding of the hole 109 in a size and shape necessary for rotating the clutch lever 84 is composed of the brush-shaped seal 111, if water overflows from the outer tank due to some cause, the water falling on the floor hardly bounces to get into the stator housing 77d from the hole 109 in which the clutch lever 84 rotates. Or, if the area of the clutch lever 84 is touched by hand by mistake, the finger is not caught in the stator housing 77d, so that the safety may be enhanced.

A twenty-seventh embodiment of the invention is described below while referring to Fig. 30.

As shown in Fig. 30, a stator housing 77d has a hole 112 for inserting a clutch lever 84 of clutch driving means 81, and this hole 112 is provided with a cover 114 having a hole 113 in a size and shape necessary for rotating the clutch lever 84. The surrounding of the hole 113 is composed of a flexible tube 115 made of bellows-like elastic piece cooperating with the clutch lever 84. The other constitution is same as in the nineteenth embodiment.

Explaining the action in this constitution, since the surrounding of the hole 113 in a size and shape necessary for rotating the clutch lever 84 is composed of the flexible tube 115 made of bellows-like elastic piece cooperating with the clutch lever 84, if water overflows from the outer tank due to some cause, the water falling on the floor hardly bounces to get into the stator housing 77d from the hole 113 in which the clutch lever 84 rotates. Or, if the area of the clutch lever 84 is touched by hand by mistake, the finger is not caught in the stator housing 77d, so that the safety may be enhanced.

## Claims

1. A washing machine comprising a hollow dewatering shaft (37) for rotating a dewatering tank (34), a washing shaft (39) disposed coaxially with said dewatering shaft (37) for rotating agitating blades (35) disposed in said dewatering tank (34), a drive motor (45) for rotating said dewatering shaft (37) and said washing shaft (39), a reduction mechanism (40) for decelerating the rotation of said drive motor (45) and rotating said washing shaft (39), and a clutch mechanism (46) for transmitting or not transmitting the rotation of the drive motor (45) to the dewatering shaft (37), wherein said reduction mechanism (40) and said drive motor (45) are disposed coaxially, said clutch mechanism (46) is composed of a torque transmitting unit (46a, 46b) for transmitting the rotation of said drive motor (45) to the dewatering shaft (34), and a drive unit (46c) for contacting with or departing from this torque transmitting unit (46a, 46b), said torque transmitting unit (46a, 46b) being partly arranged within a rotor (45a) of said motor (45) so as to form a part thereof, **characterised in that**:
the torque transmitting unit (46a, 46b) is composed of a fixed clutch (46a) formed in the rotor (45a), and a movable clutch (46b) to contact with or depart from the fixed clutch (46a) by the drive unit (46c) of the clutch mechanism (46), and said movable clutch (46b) contacts with the fixed clutch (46a) when dewatering and departs therefrom when washing by the action of the drive unit (46c) of the clutch mechanism (46).

2. A washing machine of claim 1, wherein part of the torque transmitting unit (46a, 46b) of the clutch mechanism (46) is formed at the outer circumferential side from the axial centre of the rotor (45a).

3. A washing machine of claim 1, wherein the rotor (45a) is composed of a disk, and a magnet mounting part (45c) extended in the height direction on the outer circumference of the disk, and the torque transmitting unit (46a, 46b) of the clutch mechanism (46) is disposed in a space enclosed by the disk and the magnet mounting part (45c).

4. A washing machine of claim 1 or 3, wherein the reduction mechanism (40) is enclosed by the drive motor (45).

5. A washing machine of claim 1, wherein a stopping part (47d) is provided in the lower part of a case (43) for accommodating the reduction mechanism (40), an engaging part (47b) to be engaged with the stopping part (47d) of said case (43) is provided in the movable clutch (46b), and, when washing, the engaging part (47b) of said movable clutch (46b) is stopped by the stopping part (47d) of the case (43) so as to block rotation of the movable clutch (46b).

6. A washing machine of claim 1, wherein said recuction mechanism (40) is arranged to rotate said washing shaft (39) by connecting it to the output side and connecting a washing side input shaft (41) to the input side, said clutch mechanism (46) and the lower part of said washing side input shaft (41) are coupled to the rotor (45a) of said drive motor (45).

7. A washing machine of claim 1, wherein said clutch mechanism (46) is disposed between the rotor (45a) of said drive motor (45) and the lower part of the dewatering shaft (37), and said clutch mechanism (46) and the lower part of the washing side input shaft (41) are coupled to the rotor (45a) of said drive motor (45).

8. A washing machine of any one of claims 1 to 6, the case (43) for incorporating the dewatering shaft (37) having a bearing (44) for supporting the dewatering shaft (37), wherein the lower outer circumference of this case (43) is curved to the axial central side, and the mounting part of the drive motor (45) is provided in this dent.

9. A washing machine of claim 1 or 6, wherein the washing side input shaft (41) at the input side of said reduction mechanism (40) and the rotor (45a) of the drive motor (45) are formed integrally.

10. A washing machine of claim 1, wherein said drive motor (45) is composed of said rotor (45a), a stator (45b) and a stator housing (45d) for rotating said dewatering shaft (37) and said washing shaft (39) by the rotation of said rotor (45a), and a case (48) incorporating said dewatering shaft (37) for holding said stator housing (45d).

11. A washing machine of claim 10, wherein a dewatering bearing (44) is provided in the lower inner side of said case (48), and the stator housing 45d of the drive motor (45) is provided at the lower outer side of said case (48).

12. A washing machine of claim 10, wherein the case lower part is curved to the axial central side, and a dewatering bearing (44) for supporting the dewatering shaft is disposed inside of this dent (55), and the stator housing (45d) of the drive motor (45) is provided outside of the dent (55).

13. A washing machine of claim 10, wherein nearly cylindrical recess (47b) and bump (47a) are formed along the outer circumference, and there are provided an outer surface of the case lower part having such recess and bump extended along the axial direction, and an inner surface of a nearly cylindrical opening provided in the centre of the stator housing (45d) in the shape to be fitted with said outer surface.

14. A washing machine of claim 12, wherein the top panel centre of the stator housing of the drive motor (45) is fitted to the root of the dent (55), and the top panel outer circumference is directly fixed to an outer tank (33) suspended by a suspension (32) in an outer casing (31).

15. A washing machine of claim 10, wherein an accommodating part for accommodating the dewatering bearing (44) is provided in the top panel centre of the stator housing (45d) of the drive motor (45).

16. A washing machine of claim 10, wherein the case (43) incorporating the dewatering shaft (37) opens in its bottom, and has a mounting part projecting outward on the outer circumference of said opening, the stator housing 45d is held in this mounting part, an accommodating part (63) for accommodating the dewatering bearing (44) for supporting the dewatering shaft (37) is provided in the upper centre of the stator housing (45d) of the drive motor (45), and both case (69, 66) and stator housing upper surface are directly fixed in an outer tank (33) suspended by a suspension (32) in an outer casing (31).

17. A washing machine of claim 16, wherein the top panel outer circumference positioned outside from the side of the nearly cylindrical stator housing (45d) and the case (43) are fitted together directly in the outer tank (33) suspended by a suspension (32) in an outer casing (31).

18. A washing machine of claim 10, wherein the diameter of the stator (45b) is nearly equal to the diameter of the outer tank (33) suspended by a suspension (32) in the dewatering tank or outer casing (31).

19. A washing machine of claim 1, wherein said clutch mechanism (74) is composed of a clutch input boss (74d) for transmitting the rotation of said drive motor (73) to said dewatering shaft (37), a clutch spring (74b), a control pawl (74e) formed by bending the end of said clutch spring (74b), a release sleeve (74c) forming a notch to be fitted with said control pawl (74e), clutch driving means (74a) for fixing or releasing a stopper (74f) provided in said release sleeve (74c), and a clutch output boss (74g) of said dewatering shaft (37) around which said clutch spring (74b) is wound, and part of said clutch mechanism (74) is enclosed in the rotor of said drive motor (73).

20. A washing machine of claim 19, wherein the clutch input boss (74d) of part of the clutch mechanism (74) is formed in the rotor (73a) of the drive motor (73).

21. A washing machine of claim 20, wherein the surface of the clutch input boss (74d) is a separate member.

22. A washing machine of claim 20, wherein the rotor (73a) of the drive motor (73) and the clutch input boss (74d) are formed of a thin magnetic material, and are integrated.

23. A washing machine of claim 19, wherein engaging clutches (74h,73e) for transmitting the torque generated in the rotor (73a) of the drive motor (73) to the clutch input boss (74d) are provided in the rotor (73a) of the drive motor (73) and the clutch input boss (74d).

24. A washing machine of claim 23, wherein an engaging clutch (74h) for transmitting the torque generated in the rotor (73a) of the drive motor (73) to the clutch input boss 74d is provided at the outer side from the outer circumference of the clutch input boss (74d).

25. A washing machine of claim 19, wherein the clutch output boss (74g) of the dewatering shaft (37) and the washing shaft (39) are separate parts, and engaging clutches (37a, 74j) for transmitting the torque transmitted to the clutch output boss (74g) to the dewatering shaft (37) are provided in the clutch output boss (74g) of the dewatering shaft (37) and the washing shaft (39).

26. A washing machine of claim 1, wherein the clutch mechanism (78) is configured for changing over the rotation of said motor (73) to either the dewatering shaft (37) or the washing shaft (39), said clutch mechanism (78) is disposed inside of a stator housing (77d) for composing said motor (73), and clutch driving means (81) for driving said clutch mechanism (78) from outside of said stator housing (77d).

27. A washing machine of claim 26, wherein a hole (86) for inserting the clutch driving means (81) is provided in the stator housing (77d).

28. A washing machine of claim 27, wherein the hole (86) provided in the stator housing (77d) differs in the opening area between the inlet side and outlet side.

29. A washing machine of claim 27, wherein the hole (89) provided in the stator housing (77d) is coupled with a member having a hole in a size and shape necessary for rotating the clutch driving means (81) after inserting the clutch driving means (81).

30. A washing machine of claim 29, wherein the hole (92) provided in the stator housing (77d) has a bump (94) to be fitted with a coupling part with a member having a size and shape necessary for rotating the clutch driving means (81) in part of the surrounding of the hole (92).

31. A washing machine of claim 27, wherein a lid (99) cooperating with the clutch driving means (81) is provided so as to cover the hole (96) for rotating the clutch driving means (81).

32. A washing machine of claim 27, wherein a wall is formed by a rib (103) around the hole (100) for rotating the clutch driving means (81), and the position of said hole (100) is heightened.

33. A washing machine of claim 27, wherein the hole (104) for rotating the clutch driving means (81) is formed of a seal (107) of rubber-like elastic piece on the circumference.

34. A washing machine of claim 27, wherein the hole (109) for rotating the clutch driving means (81) is formed of a brush-shaped seal (111) on the circumference.

35. A washing machine of claim 27, wherein the hole (112) for rotating the clutch driving means (81) has a flexible tube (115) composed of bellows-like elastic piece cooperating with the clutch driving means (81) provided on the circumference.

## Patentansprüche

1. Waschmaschine mit
einer hohlen Entwässerungswelle (37) zum Drehen eines Entwässerungsbehälters (34);
einer Waschwelle (39), die koaxial mit der Entwässerungswelle (37) angeordnet ist, zum Drehen von Rührflügeln (35), die in dem Entwässerungsbehälter (34) angeordnet sind;
einem Antriebsmotor (45) zum Drehen der Entwässerungswelle (37) und der Waschwelle (39);
einem Untersetzungsgetriebe (40) zum Verlangsamen der Drehung des Antriebsmotors (45) und zum Drehen der Waschwelle (39) und
einem Kupplungsmechanismus (46) zum Übertragen oder Nichtübertragen der Drehung des Antriebsmotors (45) auf die Entwässerungswelle (37),
wobei das Untersetzungsgetriebe (40) und der Antriebsmotor (45) koaxial angeordnet sind und
der Kupplungsmechanismus (46) aus einer Drehmoment-Übertragungseinheit (46a, 46b) zum Übertragen der Drehung des Antriebsmotors (45) auf die Entwässerungswelle (34) und einer Antriebseinheit (46c) zum Ein- oder Ausrücken in die oder aus der Drehmoment-Übertragungseinheit (46a, 46b), die teilweise in einem Läufer (45a) des Antriebsmotors (45) angeordnet ist, sodass sie einen Teil des Läufers (45a) bildet, besteht,
**dadurch gekennzeichnet, dass**
die Drehmoment-Übertragungseinheit (46a, 46b) aus einer festen Kupplung (46a), die in dem Läufer (45a) ausgebildet ist, und einer beweglichen Kupplung (46b) zum Ein- oder Ausrücken in die oder aus der festen Kupplung (46a) durch die Antriebseinheit (46c) des Kupplungsmechanismus (46) besteht und
die bewegliche Kupplung (46b) durch die Wirkung der Antriebseinheit (46c) des Kupplungsmechanismus (46) beim Entwässern in die feste Kupplung (46a) einrückt und beim Waschen aus der festen Kupplung (46a) ausrückt.

2. Waschmaschine nach Anspruch 1, **dadurch gekennzeichnet, dass** ein Teil der Drehmoment-Übertragungseinheit (46a, 46b) des Kupplungsmechanismus (46) an der Außenperipherieseite von der Achsmitte des Läufers (45a) aus ausgebildet ist.

3. Waschmaschine nach Anspruch 1, **dadurch gekennzeichnet, dass** der Läufer (45a) aus einer Scheibe und einem Magnetbefestigungsteil (45c) besteht, das in Höhenrichtung an der A ußenperipherie d er S cheibe verläuft, u nd dass d ie D rehmoment-Übertragungseinheit (46a, 46b) des Kupplungsmechanismus (46) in einem von der Scheibe und dem Magnetbefestigungsteil (45c) umschlossenen Raum angeordnet ist.

4. Waschmaschine nach Anspruch 1 oder 3, **dadurch gekennzeichnet, dass** das Untersetzungsgetriebe (40) von dem Antriebsmotor (45) umschlossen ist.

5. Waschmaschine nach Anspruch 1, **dadurch gekennzeichnet, dass** ein Anschlagteil (47d) am unteren Teil eines Gehäuses (43) zum Aufnehmen des Untersetzungsgetriebes (40) vorgesehen ist, dass ein Eingriffteil (47b) zum Eingreifen in das Anschlagteil (47d) des Gehäuses (43) in der beweglichen Kupplung (46b) vorgesehen ist und dass beim Waschen das Eingriffteil (47b) der beweglichen Kupplung (46b) von dem Anschlagteil (47d) des Gehäuses (43) gestoppt wird, sodass die Drehung der beweglichen Kupplung (46b) blockiert wird.

6. Waschmaschine nach Anspruch 1, **dadurch gekennzeichnet, dass** das Untersetzungsgetriebe (40) so angeordnet ist, dass es die Waschwelle (39) durch Verbinden der Waschwelle (39) mit der Abtriebsseite und durch Verbinden einer waschseitigen Antriebswelle (41) mit der Antriebsseite dreht und dass der Kupplungsmechanismus (46) und der untere Teil der waschseitigen Antriebswelle (41) mit dem Läufer (45a) des Antriebsmotors (45) verbunden sind.

7. Waschmaschine nach Anspruch 1, **dadurch gekennzeichnet, dass** der Kupplungsmechanismus (46) zwischen dem Läufer (45a) des Antriebsmotors (45) und dem unteren Teil der Entwässerungswelle (37) angeordnet ist und dass der Kupplungsmechanismus (46) und der untere Teil der waschseitigen Antriebswelle (41) mit dem Läufer (45a) des Antriebsmotors (45) verbunden sind.

8. Waschmaschine nach einem der Ansprüche 1 bis 6, bei der das Gehäuse (43) zum Einbau d er E ntwässerungswelle (37) e in L ager (44) z um T ragen d er Entwässerungswelle (37) hat, **dadurch gekennzeichnet, dass** die untere Außenperipherie des Gehäuses (43) zur Achsmitte gebogen ist und dass das Befestigungsteil des Antriebsmotors (45) in dieser Ausbuchtung vorgesehen ist.

9. Waschmaschine nach Anspruch 1 oder 6, **dadurch gekennzeichnet, dass** die waschseitige Antriebswelle (41) des antriebsseitigen Untersetzungsgetriebes (40) und der Läufer (45a) des Antriebsmotors (45) eine Einheit bilden.

10. Waschmaschine nach Anspruch 1, **dadurch gekennzeichnet, dass** der Antriebsmotor (45) aus dem Läufer (45a), einem Ständer (45b) und einem Ständergehäuse (45d) zum Drehen der Entwässerungswelle (37) und der Waschwelle (39) durch Drehen des Läufers (45a) und aus einem Gehäuse (48), das die Entwässerungswelle (37) enthält, zum Halten des Ständergehäuses (45d) besteht.

11. Waschmaschine nach Anspruch 10, **dadurch gekennzeichnet, dass** an der unteren Innenseite des Gehäuses (48) ein E ntwässerungslager (44) vorgesehen ist und dass das Ständergehäuse (45d) des Antriebsmotors (45) an der unteren Außenseite des Gehäuses (48) vorgesehen ist.

12. Waschmaschine nach Anspruch 10, **dadurch gekennzeichnet, dass** der untere Gehäuseteil zur Achsmitte gebogen ist, dass in der Ausbuchtung (55) ein Entwässerungslager (44) zum Tragen der Entwässerungswelle (37) vorgesehen ist und dass das Ständergehäuse (45d) des Antriebsmotors (45) außerhalb der Ausbuchtung (55) vorgesehen ist.

13. Waschmaschine nach Anspruch 10, **dadurch gekennzeichnet, dass** eine Aussparung (47b) u nd e ine E rhebung (47a), d ie n ahezu zylindrisch s ind, entlang d er A ußenperipherie ausgebildet sind und dass eine Außenfläche des unteren Gehäuseteils, die die in Achsrichtung verlaufende Aussparung und Erhebung hat, und eine Innenfläche einer nahezu zylindrischen Öffnung, die in der Mitte des Ständergehäuses (45d) vorgesehen ist und so gestaltet ist, dass sie mit der Außenfläche zusammenpasst, vorgesehen sind.

14. Waschmaschine nach Anspruch 12, **dadurch gekennzeichnet, dass** die Oberblechmitte des Ständergehäuses (45d) des Antriebsmotors (45) am Fuß der Ausbuchtung (55) befestigt ist und dass die Oberblech-Außenperipherie direkt an einem Außenbehälter (33) befestigt ist, der mit einer Aufhängung (32) in einem Außengehäuse (31) aufgehängt ist.

15. Waschmaschine nach Anspruch 10, **dadurch gekennzeichnet, dass** ein Aufnahmeteil zum Aufnehmen des Entwässerungslagers (44) in der Oberblechmitte des Ständergehäuses (45d) des Antriebsmotors (45) vorgesehen ist.

16. Waschmaschine nach Anspruch 10, **dadurch gekennzeichnet, dass** das Gehäuse (43), das die Entwässerungswelle (37) enthält, an seiner Unterseite offen ist und ein Befestigungsteil hat, das an der Außenperipherie der Öffnung nach außen herausragt, dass das Ständergehäuse (45d) in dem Befestigungsteil gehalten wird, dass ein Aufnahmeteil (63) zum Aufnehmen des Entwässerungslagers (44) zum Tragen der Entwässerungswelle (37) in der oberen Mitte des Ständergehäuses (45d) des Antriebsmotors (45) vorgesehen ist und dass die Oberseiten des Gehäuses (69, 66) und des Ständergehäuses (45d) direkt an einem Außenbehälter (33) befestigt sind, der mit einer Aufhängung (32) in einem Außengehäuse (31) aufgehängt ist.

17. Waschmaschine nach Anspruch 16, **dadurch gekennzeichnet, dass** das Oberblech an seiner Außenperipherie, die sich außerhalb der Seitenwand des nahezu zylindrischen Ständergehäuses (45d) befindet, und das Gehäuse (43) direkt im Außenbehälter (33) aneinander befestigt sind, der mit einer Aufhängung (32) in einem Außengehäuse (31) aufgehängt ist.

18. Waschmaschine nach Anspruch 10, **dadurch gekennzeichnet, dass** der Durchmesser des Ständers (45b) fast gleich dem Durchmesser des Außenbehälters (33) ist, der mit einer Aufhängung (32) im Entwässerungsbehälter oder Außengehäuse (31) aufgehängt ist.

19. Waschmaschine nach Anspruch 1, **dadurch gekennzeichnet, dass** der Kupplungsmechanismus (74) a us e iner K upplungsantriebsnabe (74d) z um Ü bertragen d er Drehung des Antriebsmotors (73) auf die Entwässerungswelle (37), einer Kupplungsfeder (74b), einer durch Biegen des Endes der Kupplungsfeder (74b) ausgebildeten Steuersperrklinke (74e), einer Auslösebuchse (74c), die eine Kerbe zum Zusammenpassen mit der Steuersperrklinke (74e) bildet, Kupplungsantriebsmitteln (74a) zum Feststellen oder Lösen eines in der Auslösebuchse (74c) vorgesehenen Anschlags (74f), und aus einer Kupplungsabtriebsnabe (74g) der Entwässerungswelle (37), um die die Kupplungsfeder (74b) gewickelt ist, besteht und dass ein Teil des Kupplungsmechanismus (74) vom Läufer (73a) des Antriebsmotors (73) umschlossen ist.

20. Waschmaschine nach Anspruch 19, **dadurch gekennzeichnet, dass** die Kupplungsantriebsnabe (74d) eines Teils des Kupplungsmechanismus (74) im Läufer (73a) des Antriebsmotors (73) ausgebildet ist.

21. Waschmaschine nach Anspruch 20, **dadurch gekennzeichnet, dass** die Oberseite der Kupplungsantriebsnabe (74d) ein gesondertes Teil ist.

22. Waschmaschine nach Anspruch 20, **dadurch gekennzeichnet, dass** der Läufer (73a) des Antriebsmotors (73) und die Kupplungsantriebsnabe (74d) aus einem dünnen magnetischen Material bestehen und eine Einheit bilden.

23. Waschmaschine nach Anspruch 19, **dadurch gekennzeichnet, dass** Mitnehmerkupplungen (74h, 73e) zum Übertragen des im Läufer (73a) des Antriebsmotors (73) erzeugten Drehmoments auf die Kupplungsantriebsnabe (74d) im Läufer (73a) des Antriebsmotors (73) und in der Kupplungsantriebsnabe (74d) vorgesehen sind.

24. Waschmaschine nach Anspruch 23, **dadurch gekennzeichnet, dass** eine Mitnehmerkupplung (74h) zum Übertragen des im Läufer (73a) des Antriebsmotors (73) erzeugten Drehmoments auf die Kupplungsantriebsnabe (74d) an der Außenseite von der Außenperipherie der Kupplungsantriebsnabe (74d) her vorgesehen ist.

25. Waschmaschine nach Anspruch 19, **dadurch gekennzeichnet, dass** die Kupplungsabtriebsnaben (74g) der Entwässerungswelle (37) und der Waschwelle (39) getrennte Teile sind und dass Mitnehmerkupplungen (37a, 74j) zum Übertragen des auf die Kupplungsabtriebsnabe (74g) übertragenen Drehmoments auf die Entwässerungswelle (37) in der Kupplungsabtriebsnabe (74g) der Entwässerungswelle (37) und der Waschwelle (39) vorgesehen sind.

26. Waschmaschine nach Anspruch 1, **dadurch gekennzeichnet, dass** der Kupplungsmechanismus (78) zum Umschalten der Drehung des Antriebsmotors (73) auf die Entwässerungswelle (37) oder die Waschwelle (39) konfiguriert ist, dass der Kupplungsmechanismus (78) in einem Ständergehäuse (77d) für den Antriebsmotor (73) angeordnet ist und dass die Kupplungsantriebsmittel (81) zum Antreiben des Kupplungsmechanismus (78) von außerhalb des Ständergehäuses (77d) ...

27. Waschmaschine nach Anspruch 26, **dadurch gekennzeichnet, dass** ein Loch (86) zum Einstecken der Kupplungsantriebsmittel (81) im Ständergehäuse (77d) vorgesehen ist.

28. Waschmaschine nach Anspruch 27, **dadurch gekennzeichnet, dass** das im Ständergehäuse (77d) vorgesehene Loch (86) an der Einlass- und Auslassseite unterschiedliche Öffnungsflächen hat.

29. Waschmaschine nach Anspruch 27, **dadurch gekennzeichnet, dass** das im Ständergehäuse (77d) vorgesehene Loch (89) mit einem Teil mit einem Loch verbunden ist, das so bemessen und gestaltet ist, dass die Kupplungsantriebsmittel (81), nachdem sie eingesteckt worden sind, gedreht werden können.

30. Waschmaschine nach Anspruch 29, **dadurch gekennzeichnet, dass** das im Ständergehäuse (77d) vorgesehene Loch (92) eine Erhebung (94) hat, sodass es zu einem Verbindungsteil mit einem Glied passt, das so bemessen und gestaltet ist, dass die Kupplungsantriebsmittel (81) in einem Teil der Umgebung des Lochs (92) gedreht werden können.

31. Waschmaschine nach Anspruch 27, **dadurch gekennzeichnet, dass** ein Deckel (99), der mit den Kupplungsantriebsmitteln (81) zusammenwirkt, so vorgesehen ist, dass er das Loch (96) zum Drehen der Kupplungsantriebsmittel (81) bedeckt.

32. Waschmaschine nach Anspruch 27, **dadurch gekennzeichnet, dass** eine Wand von einer Rippe (103) um das Loch (100) zum Drehen der Kupplungsantriebsmittel (81) gebildet wird und dass die Lage des Lochs (100) erhöht ist.

33. Waschmaschine nach Anspruch 27, **dadurch gekennzeichnet, dass** das Loch (104) zum Drehen der Kupplungsantriebsmittel (81) aus einer Dichtung (107) aus einem Gummiähnlichen elastischen Teil an der Peripherie besteht.

34. Waschmaschine nach Anspruch 27, **dadurch gekennzeichnet, dass** das Loch (109) zum Drehen der Kupplungsantriebsmittel (81) aus einer bürstenförmigen Dichtung (111) an der Peripherie besteht.

35. Waschmaschine nach Anspruch 27, **dadurch gekennzeichnet, dass** das Loch (112) zum Drehen der Kupplungsantriebsmittel (81) einen Schlauch (115) hat, der aus einem Blasebalg-ähnlichen elastischen Teil besteht, das mit den an der Peripherie vorgesehenen Kupplungsantriebsmitteln (81) zusammenwirkt.

## Revendications

1. Machine à laver comprenant un arbre d'essorage creux (37) destiné à faire tourner une cuve d'essorage (34), un arbre de lavage (39) disposé de façon coaxiale avec ledit arbre d'essorage (37) destiné à faire tourner des pales d'agitation (35) disposées dans ladite cuve d'essorage (34), un moteur d'entraînement (45) destiné à faire tourner ledit arbre d'essorage (37) et ledit arbre de lavage (39), un mécanisme de réduction (40) destiné à ralentir la rotation dudit moteur d'entraînement (45) et faire tourner ledit arbre de lavage (39), et un mécanisme d'embrayage (46) destiné à transmettre ou à ne pas transmettre la rotation du moteur d'entraînement (45) à l'arbre d'essorage (37), où ledit mécanisme de réduction (40) et ledit moteur d'entraînement (45) sont disposés de façon coaxiale, ledit mécanisme d'embrayage (46) est composé d'une unité de transmission de couple (46a, 46b) destinée à transmettre la rotation dudit moteur d'entraînement (45) à l'arbre d'essorage (34), et d'une unité d'entraînement (46c) destinée à venir en contact avec cette unité de transmission de couple (46a, 46b) ou s'écarter de celle-ci, ladite unité de transmission de couple (46a, 46b) étant agencée partiellement à l'intérieur d'un rotor (45a) dudit moteur (45) de façon à faire partie de celui-ci, **caractérisée en ce que** :
l'unité de transmission de couple (46a, 46b) est composée d'un embrayage fixe (46a) formé dans le rotor (45a), et d'un embrayage mobile (46b) pour venir en contact avec l'embrayage fixe (46a) ou s'écarter de celui-ci grâce à l'unité d'entraînement (46c) du mécanisme d'embrayage (46), et ledit embrayage mobile (46b) vient en contact avec l'embrayage fixe (46a) lors de l'essorage et s'écarte de celui-ci lors du lavage par l'action de l'unité d'entraînement (46c) du mécanisme d'embrayage (46).

2. Machine à laver selon la revendication 1, dans laquelle une partie d'unité de transmission de couple (46a, 46b) du mécanisme d'embrayage (46) est formée au niveau du côté circonférentiel extérieur par rapport au centre axial du rotor (45a).

3. Machine à laver selon la revendication 1, dans laquelle le rotor (45a) est composé d'un disque et d'une partie de montage d'aimant (45c) s'étendant dans la direction de la hauteur sur la circonférence extérieure du disque, et l'unité de transmission de couple (46a, 46b) du mécanisme d'embrayage (46) est disposée dans un espace enfermé par le disque et la partie de montage d'aimant (45c).

4. Machine à laver selon la revendication 1 ou 3, dans laquelle le mécanisme de réduction (40) est enfermé par le moteur d'entraînement (45).

5. Machine à laver selon la revendication 1, dans laquelle une partie de butée (47d) est prévue dans la partie inférieure d'un boîtier (43) destiné à loger le mécanisme de réduction (40), une partie de mise en prise (47b) devant être mise en prise avec la partie de butée (47d) dudit boîtier (43) est prévue dans l'embrayage mobile (46b) et, lors du lavage, la partie de mise en prise (47b) dudit embrayage mobile (46b) est arrêtée par la partie de butée (47d) du boîtier (43) de façon à bloquer la rotation de l'embrayage mobile (46b).

6. Machine à laver selon la revendication 1, dans laquelle ledit mécanisme de réduction (40) est agencé pour faire tourner ledit arbre de lavage (39) en reliant celui-ci au côté de sortie et en reliant un arbre d'entrée du côté lavage (41) au côté d'entrée, ledit mécanisme d'embrayage (46) et la partie inférieure dudit arbre d'entrée du côté lavage (41) sont couplés au rotor (45a) dudit moteur d'entraînement (45).

7. Machine à laver selon la revendication 1, dans laquelle ledit mécanisme d'embrayage (46) est disposé entre le rotor (45a) dudit moteur d'entraînement (45) et la partie inférieure dudit arbre d'essorage (37), et ledit mécanisme d'embrayage (46) et la partie inférieure de l'arbre d'entrée du côté lavage (41) sont couplés au rotor (45a) dudit moteur d'entraînement (45).

8. Machine à laver selon l'une quelconque des revendications 1 à 6, le boîtier (43) destiné à incorporer l'arbre d'essorage (37) comportant un palier (44) destiné à supporter l'arbre d'essorage (37), où la circonférence extérieure inférieure de ce boîtier (43) est courbée vers le côté central axial, et la partie de montage du moteur d'entraînement (45) est disposée dans cette déformation.

9. Machine à laver selon la revendication 1 ou 6, dans laquelle l'arbre d'entrée du côté lavage (41) au niveau du côté d'entrée dudit mécanisme de réduction (40) et le rotor (45a) du moteur d'entraînement (45) sont formés de façon intégrée.

10. Machine à laver selon la revendication 1, dans laquelle ledit moteur d'entraînement (45) est composé dudit rotor (45a), d'un stator (45b) et d'un logement de stator (45d) en vue de faire tourner ledit arbre d'essorage (37) et ledit arbre de lavage (39) par la rotation dudit rotor (45a), et d'un boîtier (48) incorporant ledit arbre d'essorage (37) en vue de maintenir ledit logement de stator (45d).

11. Machine à laver selon la revendication 10, dans laquelle un palier d'essorage (44) est disposé dans le côté intérieur inférieur dudit boîtier (48), et le logement de stator (45d) du moteur d'entraînement (45) est disposé au niveau du côté extérieur inférieur dudit boîtier (48).

12. Machine à laver selon la revendication 10, dans laquelle la partie inférieure de boîtier est courbée vers le côté central axial, et un palier d'essorage (44) destiné à supporter l'arbre d'essorage est disposé à l'intérieur de cette déformation (55), et le logement de stator (45d) du moteur d'entraînement (45) est disposé à l'extérieur de la déformation (55).

13. Machine à laver selon la revendication 10, dans laquelle un évidement presque cylindrique (47b) et une protubérance (47a) sont formés le long de la circonférence extérieure, et il est prévu une surface extérieure de la partie inférieure de boîtier comportant un tel évidement et une telle protubérance s'étendant le long de la direction axiale, une surface intérieure d'une ouverture presque cylindrique prévue au centre du logement de stator (45d) présentant une forme devant loger dans ladite surface extérieure.

14. Machine à laver selon la revendication 12, dans laquelle le centre de panneau supérieur du logement de stator du moteur d'entraînement (45) est logé dans la base de la déformation (55), la circonférence extérieure de panneau supérieur est directement fixée à une cuve extérieure (33) suspendue par une suspension (32) dans une carrosserie extérieure (31).

15. Machine à laver selon la revendication 10, dans laquelle une partie de logement destinée à loger le palier d'essorage (44) est prévue dans le centre de panneau supérieur du logement de stator (45d) du moteur d'entraînement (45).

16. Machine à laver selon la revendication 10, dans laquelle le boîtier (43) incorporant l'arbre d'essorage (37) s'ouvre en son fond, et comporte une partie de montage dépassant vers l'extérieur sur la circonférence extérieure de ladite ouverture, le logement de stator (45d) est maintenu dans cette partie de montage, et une partie de logement (63) destinée à loger le palier d'essorage (44) destiné à supporter l'arbre d'essorage (37) est disposé au centre supérieur du logement de stator (45d) du moteur d'entraînement (45), et à la fois le boîtier (69, 66) et la surface supérieure de logement de stator sont directement fixés dans une cuve extérieure (33) suspendue par une suspension (32) dans une carrosserie extérieure (31).

17. Machine à laver selon la revendication 16, dans laquelle la circonférence extérieure de panneau supérieur positionné à l'extérieur depuis le côté du logement de stator presque cylindrique (45d) et le boîtier (43) sont logés ensemble directement dans la cuve extérieure (33) suspendue par une suspension (32) dans une carrosserie extérieure (31).

18. Machine à laver selon la revendication 10, dans laquelle le diamètre du stator (45b) est presque égal au diamètre de la cuve extérieure (33) suspendue par une suspension (32) dans la cuve d'essorage ou la carrosserie extérieure (31).

19. Machine à laver selon la revendication 1, dans laquelle ledit mécanisme d'embrayage (74) est composé d'un moyeu d'entrée d'embrayage (74d) destiné à transmettre la rotation dudit moteur d'entraînement (73) audit arbre d'essorage (37), d'un ressort d'embrayage (74b), d'un doigt de commande (74e) formé en pliant l'extrémité dudit ressort d'embrayage (74b), d'un manchon de libération (74c) formant une encoche devant être adaptée audit doigt de commande (74e), d'un moyen d'entraînement d'embrayage (74a) destiné à fixer ou à libérer une butée (74f) réalisée dans ledit manchon de libération (74c) et d'un moyeu de sortie d'embrayage (74g) dudit arbre d'essorage (37) autour duquel ledit ressort d'embrayage (74b) est enroulé, et une partie dudit mécanisme d'embrayage (74) est enfermée dans le rotor dudit moteur d'entraînement (73).

20. Machine à laver selon la revendication 19, dans laquelle le moyeu d'entrée d'embrayage (74d) d'une partie du mécanisme d'embrayage (74) est formé dans le rotor (73a) du moteur d'entraînement (73).

21. Machine à laver selon la revendication 20, dans laquelle la surface du moyeu d'entrée d'embrayage (74d) est un élément séparé.

22. Machine à laver selon la revendication 20, dans laquelle le rotor (73a) du moteur d'entraînement (73) et le moyeu d'entrée d'embrayage (74d) sont formés d'un matériau magnétique mince, et sont intégrés.

23. Machine à laver selon la revendication 19, dans laquelle les embrayages de mise en prise (74h, 73e) destinés à transmettre le couple généré dans le rotor (73a) du moteur d'entraînement (73) au moyeu d'entrée d'embrayage (74d) sont prévus dans le rotor (73a) du moteur d'entraînement (73) et le moyeu d'entrée d'embrayage (74d).

24. Machine à laver selon la revendication 23, dans laquelle un embrayage de mise en prise (74h) destiné à transmettre le couple généré dans le rotor (73a) du moteur d'entraînement (73) au moyeu d'entrée d'embrayage (74d) est prévu au niveau du côté extérieur par rapport à la circonférence extérieure du moyeu d'entrée d'embrayage (74d).

25. Machine à laver selon la revendication 19, dans laquelle le moyeu de sortie d'embrayage (74g) de l'arbre d'essorage (37) et l'arbre de lavage (39) sont des pièces séparées, et les embrayages de mise en prise (37a, 74j) destinés à transmettre le couple transmis au moyeu de sortie d'embrayage (74g) à l'arbre d'essorage (37), sont prévus dans le moyeu de sortie d'embrayage (74g) de l'arbre d'essorage (37) et l'arbre de lavage (39).

26. Machine à laver selon la revendication 1, dans laquelle le mécanisme d'embrayage (78) est configuré pour inverser la rotation dudit moteur (73) soit vers l'arbre d'essorage (37) soit vers l'arbre de lavage (39), ledit mécanisme d'embrayage (78) est disposé à l'intérieur d'un logement de stator (77d) en vue de composer ledit moteur (73), et un moyen d'entraînement d'embrayage (81) destiné à entraîner ledit mécanisme d'embrayage (78) depuis l'extérieur dudit logement de stator (77d).

27. Machine à laver selon la revendication 26, dans laquelle un trou (86) destiné à insérer le moyen d'entraînement d'embrayage (81) est réalisé dans le logement de stator (77d).

28. Machine à laver selon la revendication 27, dans laquelle le trou (86) réalisé dans le logement de stator (77d) diffère en ce qui concerne la surface d'ouverture entre le côté d'entrée et le côté de sortie.

29. Machine à laver selon la revendication 27, dans laquelle le trou (89) réalisé dans le logement de stator (77d) est couplé à un élément comportant un trou présentant une taille et une forme nécessaires pour faire tourner le moyen d'entraînement d'embrayage (81) après l'insertion du moyen d'entraînement d'embrayage (81).

30. Machine à laver selon la revendication 29, dans laquelle le trou (92) réalisé dans le logement de stator (77d) comporte une protubérance (94) devant être adaptée avec une partie d'accouplement comportant un élément présentant une taille et une forme nécessaires pour faire tourner le moyen d'entraînement d'embrayage (81) dans une partie des environs du trou (92).

31. Machine à laver selon la revendication 27, dans laquelle un couvercle (99) coopérant avec le moyen d'entraînement d'embrayage (81) est prévu de façon à recouvrir le trou (96) destiné à faire tourner le moyen d'entraînement d'embrayage (81).

32. Machine à laver selon la revendication 27, dans laquelle une paroi est formée par une nervure (103) autour du trou (100) destiné à faire tourner le moyen d'entraînement d'embrayage (81) et la position dudit trou (100) est surélevée.

33. Machine à laver selon la revendication 27, dans laquelle le trou (104) destiné à faire tourner le moyen d'entraînement d'embrayage (81) est formé d'un joint (107) constitué d'une pièce élastique du type caoutchouc sur la circonférence.

34. Machine à laver selon la revendication 27, dans laquelle le trou (109) destiné à faire tourner le moyen d'entraînement d'embrayage (81) est constitué d'un joint en forme de brosse (111) sur la circonférence.

35. Machine à laver selon la revendication 27, dans laquelle le trou (112) destiné à faire tourner le moyen d'entraînement d'embrayage (81) comporte un tube flexible (115) composé d'une pièce élastique du type soufflet coopérant avec le moyen d'entraînement d'embrayage (81) prévu sur la circonférence.
